(19) Europäisches Patentamt / European Patent Office / Office européen des brevets

(11) EP 4 084 019 A1

(12) EUROPEAN PATENT APPLICATION
published in accordance with Art. 153(4) EPC

(43) Date of publication:
**02.11.2022 Bulletin 2022/44**

(21) Application number: **20906217.3**

(22) Date of filing: **21.12.2020**

(51) International Patent Classification (IPC):
***H01B 13/00*** (2006.01) ***C01B 25/14*** (2006.01)
***H01B 1/06*** (2006.01) ***H01B 1/10*** (2006.01)
***H01M 6/18*** (2006.01) ***H01M 10/0562*** (2010.01)

(52) Cooperative Patent Classification (CPC):
**C01B 25/14; H01B 1/06; H01B 1/10; H01B 13/00; H01M 6/18; H01M 10/0562;** Y02E 60/10

(86) International application number:
**PCT/JP2020/047717**

(87) International publication number:
**WO 2021/132173 (01.07.2021 Gazette 2021/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **23.12.2019 JP 2019231997**
**27.03.2020 JP 2020058914**

(71) Applicant: **Idemitsu Kosan Co., Ltd**
**Tokyo 100-8321 (JP)**

(72) Inventors:
- **SHIBATA, Mitsuru**
**Sodegaura-shi, Chiba 299-0293 (JP)**
- **KAMBARA, Takayoshi**
**Sodegaura-shi, Chiba 299-0293 (JP)**
- **SHIBATA, Masayuki**
**Sodegaura-shi, Chiba 299-0293 (JP)**

(74) Representative: **Vossius & Partner Patentanwälte Rechtsanwälte mbB**
**Siebertstraße 3**
**81675 München (DE)**

# (54) METHOD FOR PRODUCING SOLID ELECTROLYTE

(57) According to a method for producing a solid electrolyte that contains a lithium atom, a sulfur atom, a phosphorus atom and a halogen atom, including mixing a complexing agent and a solid electrolyte raw material, a solid electrolyte having a high ionic conductivity is provided using a liquid-phase method.

[Fig. 1]

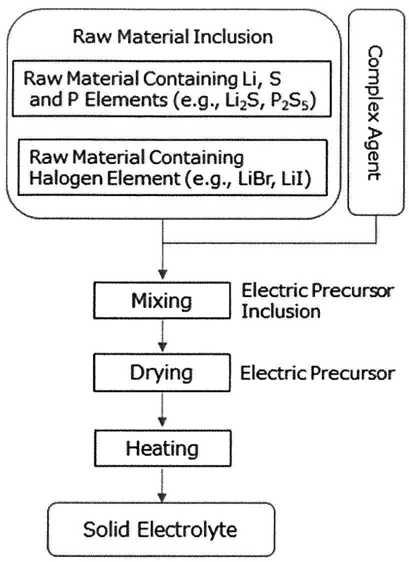


(Embodiment A)



Processed by Luminess, 75001 PARIS (FR)

## Description

### Technical Field

The present invention relates to a method for producing a solid electrolyte.

### Background Art

With rapid spread of information-related instruments, communication instruments, and so on, such as personal computers, video cameras, and mobile phones, in recent years, development of batteries that are utilized as a power source therefor is considered to be important. Heretofore, in batteries to be used for such an application, an electrolytic solution containing a flammable organic solvent has been used. However, development of batteries having a solid electrolyte layer in place of an electrolytic solution is being made in view of the fact that by making the battery fully solid, simplification of a safety unit may be realized without using a flammable organic solvent within the battery, and the battery is excellent in manufacturing costs and productivity.

A production method of a solid electrolyte to be used for a solid electrolyte layer is roughly classified into a solid-phase method and a liquid-phase method. Furthermore, as for the liquid-phase method, there are a homogeneous method in which a solid electrolyte material is completely dissolved in a solvent; and a heterogeneous method in which a solid electrolyte material is not completely dissolved in a solvent but undergoes through a suspension of solid-liquid coexistence. For example, as the solid-phase method, a method in which raw materials, such as liquid sulfide and diphosphorus pentasulfide are subjected to mechanical milling treatment using an apparatus, such as a ball mill and a bead mill and optionally subjected to heat treatment, thereby producing an amorphous or crystalline solid electrolyte is known (see, for example, PTL 1). In accordance with this method, the solid electrolyte is obtained by applying a mechanical stress to the raw materials, such as lithium sulfide, to promote the reaction of the solids with each other.

On the other hand, as for the homogenous method regarding the liquid-phase method, a method in which a solid electrolyte is dissolved in a solvent and redeposited is known (see, for example, PTL 2). In addition, as for the heterogeneous method, a method in which solid electrolyte raw materials, such as lithium sulfide, are allowed to react in a solvent containing a polar aprotic solvent is known (see, for example, PTLs 3 and 4 and NPL 1). For example, PTL 4 discloses that a production method of a solid electrolyte having an $Li_4PS_4I$ structure includes a step in which dimethoxyethane (DME) is used and bound with the $Li_3PS_4$ structure, to obtain $Li_4PS_4{\cdot}DME$. The obtained solid electrolyte has an ionic conductivity of $5.5 \times 10^{-5}$ S/cm ($3.9 \times 10^{-4}$ S/cm in the calcium-doped product). Toward practical use of an all-solid-state battery, the liquid-phase method is recently watched as a method in which it can be synthesized simply and in a large amount in addition to versatility and applicability.

### Citation List

#### Patent Literature

PTL 1: WO 2017/159667 A
PTL 2: JP 2014-191899 A
PTL 3: WO 2014/192309 A
PTL 4: WO 2018/054709 A

#### Non-Patent Literature

NPL 1: CHEMISTRY OF MATERIALS, 2017, No. 29, pp. 1830-1835

### Summary of Invention

#### Technical Problem

However, as for the conventional solid-phase method accompanied with mechanical milling treatment or the like, the solid-phase reaction is the center, and the solid electrolyte is readily obtained in a high purity, and thus, a high ionic conductivity can be realized. On the other hand, as for the liquid-phase method, for the reasons that the solid electrolyte is dissolved, and thus, decomposition and breakage of a part of the solid electrolyte components is generated during deposition, it was difficult to realize a high ionic conductivity as compared with the solid-phase synthesis method.

For example, according to the homogenous method, the raw materials or the solid electrolyte is once completely dissolved, and thus, the components can be homogenously dispersed in the liquid. But, in the subsequent deposition step, the deposition proceeds according to an inherent solubility of each of the components, and thus, it is extremely difficult to perform the deposition while keeping the dispersed state of the components. As a result, each of the components is separated and deposited. In addition, according to the homogenous method, an affinity between the solvent and lithium becomes excessively strong, and therefore, even by drying after deposition, the solvent hardly comes out. For these matters, the homogenous method involves such a problem that the ionic conductivity of the solid electrolyte is largely lowered.

In addition, even in the heterogeneous method of solid-liquid coexistence, a part of the solid electrolyte is dissolved, and thus, separation takes place owing to elution of the specified component, so that it is difficult to obtain a desired solid electrolyte.

In view of the above-mentioned circumstances,

the present invention has been made, and an object thereof is to provide a production method in which adopting a liquid-phase method, a solid electrolyte having a high ionic conductivity is obtained.

Solution to Problem

In order to solve the above-mentioned problem, the present inventor made extensive and intensive investigations. As a result, it has been found that the foregoing problem can be solved by the following inventions.

1. A method for producing a solid electrolyte that contains a lithium atom, a sulfur atom, a phosphorus atom and a halogen atom, including mixing a complexing agent and a solid electrolyte raw material, wherein the complexing agent is a heterocyclic compound having a hetero ring containing 2 or more hetero atoms.
2. The method for producing a solid electrolyte according to the above 1, wherein the hetero ring is a 3-membered or more and 12-membered or less monocyclic hetero ring.
3. The method for producing a solid electrolyte according to the above 1 or 2, wherein the hetero ring has hetero atoms not neighboring to each other.
4. The method for producing a solid electrolyte according to any one of the above 1 to 3, wherein the hetero ring is a 6-membered monocyclic hetero ring.
5. The method for producing a solid electrolyte according to any one of the above 1 to 4, wherein the hetero ring has hetero atoms connected by 2 or 3 carbon atoms.
6. The method for producing a solid electrolyte according to any one of the above 1 to 4, wherein the hetero atom is at least one atom selected from a nitrogen atom, an oxygen atom a sulfur atom and a phosphorus atom.
7. The method for producing a solid electrolyte according to any one of the above 1 to 6, wherein the hetero ring is a morpholine ring.
8. The method for producing a solid electrolyte according to any one of the above 1 to 7, wherein the complexing agent is N-methylmorpholine.
9. The method for producing a solid electrolyte according to any one of the above 1 to 6, wherein the hetero ring is a piperazine ring.
10. The method for producing a solid electrolyte according to any one of the above 1 to 6 and 9, wherein the complexing agent is N,N'-dimethylpiperazine.
11. The method for producing a solid electrolyte according to any one of the above 1 to 10, wherein the solid electrolyte contains a $PS_4^{3-}$ skeleton.
12. The method for producing a solid electrolyte according to any one of the above 1 to 11, wherein the solid electrolyte contains a thio-LISICON Region II-type crystal structure.
13. The method for producing a solid electrolyte according to any one of the above 1 to 12, wherein the solid electrolyte does not have a diffraction peak at $2\theta$ = 17.5° and 26.1° in X-ray diffractometry using a CuK$\alpha$ ray.
14. The method for producing a solid electrolyte according to any one of the above 1 to 13, wherein the solid electrolyte raw material contains lithium sulfide and diphosphorus pentasulfide.
15. The method for producing a solid electrolyte according to any one of the above 1 to 14, wherein the solid electrolyte raw material contains amorphous $Li_3PS_4$ or crystalline $Li_3PS_4$.
16. The method for producing a solid electrolyte according to any one of the above 1 to 15, including producing an electrolyte precursor constituted of the complexing agent, and a lithium atom, a sulfur atom, a phosphorus atom and a halogen atom.
17. The method for producing a solid electrolyte according to the above 16, including mixing the solid electrolyte raw material, the complexing agent, and a solvent not dissolving the electrolyte precursor.
18. The method for producing a solid electrolyte according to the above 17, wherein the solvent is at least one solvent selected from an aliphatic hydrocarbon solvent, an alicyclic hydrocarbon solvent, an aromatic hydrocarbon solvent, an ester-based solvent, a nitrile-based solvent and an ether-based solvent.
19. The method for producing a solid electrolyte according to any one of the above 16 to 18, including heating the electrolyte precursor.

Advantageous Effects of Invention

The present invention can provide a solid electrolyte having a high ionic conductivity, using a liquid-phase method.

Brief Description of Drawings

Fig. 1 is a flow chart of explaining one example of preferred modes of a production method of the present embodiment.

Fig. 2 is a flow chart of explaining one example of preferred modes of a production method of the present embodiment.

Fig. 3 is an X-ray diffraction spectrum of a solid electrolyte obtained in Example 1.

Fig. 4 is an X-ray diffraction spectrum of a crystalline solid electrolyte obtained in Example 1.

Fig. 5 is an X-ray diffraction spectrum of an electrolyte precursor obtained in Example 2.

Fig. 6 is an X-ray diffraction spectrum of a crystalline solid electrolyte obtained in Example 2.

Fig. 7 is an X-ray diffraction spectrum of an electrolyte precursor obtained in Example 3.

Fig. 8 is an X-ray diffraction spectrum of a crystalline solid electrolyte obtained in Example 3.

Fig. 9 is an X-ray diffraction spectrum of an electrolyte precursor obtained in Reference Example 1.

Fig. 10 is an X-ray diffraction spectrum of a crystalline solid electrolyte obtained in Reference Example 1.

Fig. 11 is an X-ray diffraction spectrum of an electrolyte precursor obtained in Reference Example 2.

Fig. 12 is an X-ray diffraction spectrum of a crystalline solid electrolyte obtained in Reference Example 2.

Fig. 13 is an X-ray diffraction spectrum of an electrolyte precursor obtained in Reference Example 3.

Fig. 14 is an X-ray diffraction spectrum of a crystalline solid electrolyte obtained in Reference Example 3.

Fig. 15 is an X-ray diffraction spectrum of an electrolyte precursor obtained in Reference Example 4.

Fig. 16 is an X-ray diffraction spectrum of a crystalline solid electrolyte obtained in Reference Example 4.

Fig. 17 is an X-ray diffraction spectrum of an electrolyte precursor obtained in Reference Example 5.

Fig. 18 is an X-ray diffraction spectrum of a crystalline solid electrolyte obtained in Reference Example 5.

Fig. 19 is an X-ray diffraction spectrum of an electrolyte precursor obtained in Reference Example 6.

Fig. 20 is an X-ray diffraction spectrum of a crystalline solid electrolyte obtained in Reference Example 6.

Fig. 21 is an X-ray diffraction spectrum of a solid deposit obtained in Comparative Example 1.

Fig. 22 is an X-ray diffraction spectrum of a powder obtained in Comparative Example 2.

Fig. 23 is an X-ray diffraction spectrum of an electrolyte precursor obtained in Example 4.

Fig. 24 is an X-ray diffraction spectrum of a crystalline solid electrolyte obtained in Example 4.

Description of Embodiments

Embodiments of the present invention (hereinafter sometimes referred to as "present embodiment") are hereunder described. In this specification, numerical values of an upper limit and a lower limit according to numerical value ranges of "or more", "or less", and "XX to YY" are each a numerical value which can be arbitrarily combined, and numerical values in the section of Examples can also be used as numerical values of an upper limit and a lower limit, respectively.

[Production Method for Solid Electrolyte]

The production method for a solid electrolyte of the present embodiment is a method for producing a solid electrolyte containing a lithium atom, a sulfur atom, a phosphorus atom and a halogen atom, and includes mixing a complexing agent and a solid electrolyte raw material. The complexing agent is described in detail hereinunder. Briefly, specific complexing agents are preferably employed, such as the following complexing agents (i) to (iv), a heterocyclic compound having a hetero ring containing 2 or more hetero atoms (hereinafter sometimes referred to as "complexing agent (i)"), a compound having an amino group and a nitrile group (hereinafter sometimes referred to as "complexing agent (ii)"), a compound having an alkenyl group and an ether group (hereinafter sometimes referred to as "complexing agent (iii)"), and a compound having an amino group and a branched structure (hereinafter sometimes referred to as "complexing agent (iv)").

The "solid electrolyte" as referred to in this specification means an electrolyte of keeping the solid state at 25°C in a nitrogen atmosphere. The solid electrolyte in the present embodiment is a solid electrolyte containing a lithium atom, a sulfur atom, a phosphorus atom, and a halogen atom and having an ionic conductivity to be caused owing to the lithium atom.

In the "solid electrolyte", both a crystalline solid electrolyte having a crystal structure and an amorphous solid electrolyte are included. The crystalline solid electrolyte as referred to in this specification is a material that is a solid electrolyte in which peaks derived from the solid electrolyte are observed in an X-ray diffraction pattern in the X-ray diffractometry, and the presence or absence of peaks derived from the raw materials of the solid electrolyte does not matter. That is, the crystalline solid electrolyte contains a crystal structure derived from the solid electrolyte, in which a part thereof may be a crystal structure derived from the solid electrolyte, or all of them may be a crystal structure derived from the solid electrolyte. The crystalline solid electrolyte may be one in which an amorphous solid electrolyte is contained in a part thereof so long as it has the X-ray diffraction pattern as mentioned above. In consequence, in the crystalline solid electrolyte, a so-called glass ceramics which is obtained by heating the amorphous solid electrolyte to a crystallization temperature or higher is contained.

The amorphous solid electrolyte as referred to in this specification is a halo pattern in which other peak than the peaks derived from the materials is not substantially observed in an X-ray diffraction pattern in the X-ray diffractometry, and it is meant that the presence or absence of peaks derived from the raw materials of the solid electrolyte does not matter.

The solid electrolyte raw material for use in the production method for a solid electrolyte of the present embodiment preferably contains a lithium atom, a sulfur atom, a phosphorus atom and a halogen atom, from the viewpoint of obtaining a solid electrolyte containing a lithium atom, a sulfur atom, a phosphorus atom and a halogen atom, and examples thereof include a solid electrolyte having an $Li_3PS_4$ structure.

Accordingly, the production method for a sulfide solid electrolyte of the present embodiment preferably includes the following four types of embodiments differing from each other depending on whether or not a solid electrolyte having an $Li_3PS_4$ structure is used as a solid electrolyte raw material, or whether or not a solvent is used. Preferred examples of these four kinds of embodiments

are shown in Fig. 1 (Embodiments A and B) and Fig. 2 (Embodiments C and D). Specifically, the production method for a solid electrolyte of the present embodiment preferably includes a production method using a raw material such as lithium sulfide and diphosphorus pentasulfide as a solid electrolyte material, and the above-mentioned specific complexing agent (Embodiment A); a production method using a raw material of a solid electrolyte having an $Li_3PS_4$ structure of an electrolyte main structure as a solid electrolyte raw material and using the specific complexing agent (Embodiment B); a production method of the above Embodiment A in which a solvent is added to a raw material such as lithium sulfide of a solid electrolyte raw material and the specific complexing agent (Embodiment C); and a production method of the above Embodiment B in which a solvent is added to the raw material of an $Li_3PS_4$ structure as a solid electrolyte raw material, and the specific complexing agent (Embodiment D).

Embodiments A to D are hereunder described in order.

As shown in Fig. 1, the Embodiment A is concerned with a mode in which in the production method of the present embodiment including mixing a solid electrolyte raw material and a complexing agent, preferably a specific complexing agent such as a heterocyclic compound having a hetero ring containing 2 or more hetero atoms (complexing agent (i)), a compound having an amino group and a nitrile group (complexing agent (ii)), a compound having an alkenyl group and an ether group (complexing agent (iii)), and a compound having an amino group and a branched structure (complexing agent (iv)), lithium sulfide and diphosphorus pentasulfide are used as the solid electrolyte raw material. By mixing the solid electrolyte raw material with the complexing agent, in general, an electrolyte precursor inclusion that is a suspension is obtained, and by drying it, the electrolyte precursor is obtained. Furthermore, by heating the electrolyte precursor, an amorphous or crystalline solid electrolyte is obtained. While the description is hereunder made beginning from Embodiment A, one described with the wordings "of the present embodiment" is a matter applicable even in other embodiments.

(Solid Electrolyte Raw Material)

The solid electrolyte raw material which is used in the present embodiment is, from the viewpoint of obtaining a solid electrolyte containing a lithium atom, a sulfur atom, a phosphorus atom and a halogen atom, preferably one containing a lithium atom, a sulfur atom, a phosphorus atom and a halogen atom.

As the solid electrolyte raw material, for example, one alone or plural kinds of a compound containing at least one of a lithium atom, a sulfur atom, a phosphorus atom, and a halogen atom can be used either singly or as combined. More specifically, representative examples of the foregoing compound include raw materials composed of at least two atoms selected from the above-mentioned four atoms, such as lithium sulfide; lithium halides, e.g., lithium fluoride, lithium chloride, lithium bromide, and lithium iodide; phosphorus sulfides, e.g., diphosphorus trisulfide ($P_2S_3$) and diphosphorus pentasulfide ($P_2S_5$); phosphorus halides, e.g., various phosphorus fluorides (e.g., $PF_3$ and $PF_5$), various phosphorus chlorides (e.g., $PCl_3$, $PCl_5$, and $P_2Cl_4$), various phosphorus bromides (e.g., $PBr_3$ and $PBr_5$), and various phosphorus iodides (e.g., $PI_3$ and $P_2I_4$); and thiophosphoryl halides, e.g., thiophosphoryl fluoride ($PSF_3$), thiophosphoryl chloride ($PSCl_3$), thiophosphoryl bromide ($PSBr_3$), thiophosphoryl iodide ($PSI_3$), thiophosphoryl dichlorofluoride ($PSCl_2F$), and thiophosphoryl dibromofluoride ($PSBr_2F$), as well as halogen simple substances, such as fluorine ($F_2$), chlorine ($Cl_2$), bromine ($Br_2$), and iodine ($I_2$), with bromine ($Br_2$) and iodine ($I_2$) being preferred.

As materials which may be used as the raw material other than those mentioned above, a compound containing not only at least one atom selected from the above-mentioned four atoms but also other atom than the foregoing four atoms can be used. More specifically, examples thereof include lithium compounds, such as lithium oxide, lithium hydroxide, and lithium carbonate; alkali metal sulfides, such as sodium sulfide, potassium sulfide, rubidium sulfide, and cesium sulfide; metal sulfides, such as silicon sulfide, germanium sulfide, boron sulfide, gallium sulfide, tin sulfide (e.g., SnS and $SnS_2$), aluminum sulfide, and zinc sulfide; phosphoric acid compounds, such as sodium phosphate and lithium phosphate; halide compounds of an alkali metal other than lithium, such as sodium halides, e.g., sodium iodide, sodium fluoride, sodium chloride, and sodium bromide; metal halides, such as an aluminum halide, a silicon halide, a germanium halide, an arsenic halide, a selenium halide, a tin halogen, an antimony halide, a tellurium halide, and a bismuth halide; and phosphorus oxyhalides, such as phosphorus oxychloride ($POCl_3$) and phosphorus oxybromide ($POBr_3$).

In the present embodiment, among them, phosphorus sulfides, such as lithium sulfide, diphosphorus trifluoride ($P_2S_3$), and diphosphorus pentasulfide ($P_2S_5$); halogen simple substances, such as fluorine ($F_2$), chlorine ($Cl_2$), bromine ($Br_2$), and iodine ($I_2$); and lithium halides, such as lithium fluoride, lithium chloride, lithium bromide, and lithium iodide are preferred as the raw material from the viewpoint of more easily obtaining a solid electrolyte having a high ionic conductivity. Preferred examples of a combination of raw materials include a combination of lithium sulfide, diphosphorus pentasulfide, and a lithium halide; and a combination of lithium sulfide, phosphorus pentasulfide, and a halogen simple substance, in which the lithium halide is preferably lithium bromide or lithium iodide, and the halogen simple substance is preferably bromine or iodine.

The lithium sulfide which is used in the present embodiment is preferably a particle.

An average particle diameter ($D_{50}$) of the lithium

sulfide particle is preferably 10 μm or more and 2,000 μm or less, more preferably 30 μm or more and 1,500 μm or less, and still more preferably 50 μm or more and 1,000 μm or less. In this specification, the average particle diameter ($D_{50}$) is a particle diameter to reach 50% of all the particles in sequential cumulation from the smallest particles in drawing the particle diameter distribution cumulative curve, and the volume distribution is concerned with an average particle diameter which can be, for example, measured with a laser diffraction/scattering particle diameter distribution measuring device. In addition, among the above-exemplified raw materials, the solid raw material is preferably one having an average particle diameter of the same degree as in the above-mentioned lithium sulfide particle, namely one having an average particle diameter falling within the same range as in the above-mentioned lithium sulfide particle is preferred.

In the case of using lithium sulfide, diphosphorus pentasulfide, and the lithium halide as the raw materials, from the viewpoint of obtaining higher chemical stability and a higher ionic conductivity, a proportion of lithium sulfide relative to the total of lithium sulfide and diphosphorus pentasulfide is preferably 70 to 80 mol%, more preferably 72 to 78 mol%, and still more preferably 74 to 76 mol%.

In the case of using lithium sulfide, diphosphorus pentasulfide, a lithium halide, and other raw material to be optionally used, the content of lithium sulfide and diphosphorus pentasulfide relative to the total of the above-mentioned raw materials is preferably 60 to 100 mol%, more preferably 65 to 90 mol%, and still more preferably 70 to 80 mol%.

In the case of using a combination of lithium bromide and lithium iodide as the lithium halide, from the viewpoint of enhancing the ionic conductivity, a proportion of lithium bromide relative to the total of lithium bromide and lithium iodide is preferably 1 to 99 mol%, more preferably 20 to 90 mol%, still more preferably 40 to 80 mol%, and especially preferably 50 to 70 mol%.

In the case of using not only a halogen simple substance but also lithium sulfide and diphosphorus pentasulfide as the raw materials, a proportion of the molar number of lithium sulfide excluding lithium sulfide having the same molar number as the molar number of the halogen simple substance relative to the total molar number of lithium sulfide and diphosphorus pentasulfide excluding lithium sulfide having the same molar number as the molar number of the halogen simple substance falls preferably within a range of 60 to 90%, more preferably within a range of 65 to 85%, still more preferably within a range of 68 to 82%, yet still more preferably within a range of 72 to 78%, and even yet still more preferably within a range of 73 to 77%. This is because when the foregoing proportion falls within the above-mentioned ranges, a higher ionic conductivity is obtained. In addition, in the case of using lithium sulfide, diphosphorus pentasulfide, and a halogen simple substance, from the same viewpoint, the content of the halogen simple substance relative to the total amount of lithium sulfide, diphosphorus pentasulfide, and the halogen simple substance is preferably 1 to 50 mol%, more preferably 2 to 40 mol%, still more preferably 3 to 25 mol%, and yet still more preferably 3 to 15 mol%.

In the case of using lithium sulfide, diphosphorus pentasulfide, a halogen simple substance, and a lithium halide, the content (a mol%) of the halogen simple substance and the content (β mol%) of the lithium halide relative to the total of the above-mentioned raw materials preferably satisfy the following expression (2), more preferably satisfy the following expression (3), still more preferably satisfy the following expression (4), and yet still more preferably satisfy the following expression (5).

$$2 \leq (2\alpha + \beta) \leq 100 \qquad (2)$$

$$4 \leq (2\alpha + \beta) \leq 80 \qquad (3)$$

$$6 \leq (2\alpha + \beta) \leq 50 \qquad (4)$$

$$6 \leq (2\alpha + \beta) \leq 30 \qquad (5)$$

In the case of using two halogen simple substances, when the molar number in the substance of the halogen atom of one side is designated as A1, and the molar number in the substance of the halogen atom of the other side is designated as A2, an A1/A2 ratio is preferably (1 to 99)/(99 to 1), more preferably 10/90 to 90/10, still more preferably 20/80 to 80/20, and yet still more preferably 30/70 to 70/30.

In the case where the two halogen simple substances are bromine and iodine, when the molar number of bromine is designated as B1, and the molar number of iodine is designated as B2, a B1/B2 ratio is preferably (1 to 99)/(99 to 1), more preferably 15/85 to 90/10, still more preferably 20/80 to 80/20, yet still more preferably 30/70 to 75/25, and especially preferably 35/65 to 75/25.

(Complexing Agent)

In the production method for a solid electrolyte of the present embodiment, a complexing agent needs to be used, and preferably, a specific complexing agent such as a heterocyclic compound having a hetero ring containing 2 or more hetero atoms (complexing agent (i)), a compound having an amino group and a nitrile group (complexing agent (ii)), a compound having an alkenyl group and an ether group (complexing agent (iii)), or a compound having an amino group and a branched structure (complexing agent (iv)) is used.

The complexing agent as referred to in this specification is a substance capable of forming a complex

together with a lithium atom and means one having such properties of acting with a lithium atom-containing sulfide and a halide contained in the above-mentioned raw materials, thereby promoting formation of an electrolyte precursor. Though not clear, the reason why the complexing agent contributes toward crystal structure formation in a solid electrolyte can be presumed to be as follows. A hetero atom has a high affinity with a lithium atom, and therefore as having a hetero atom, the complexing agent can readily establish a correlation with a lithium atom, therefore readily providing complex formation with a lithium atom and reaction with a sulfide or a halide containing a lithium atom to readily promote formation of an electrolyte precursor.

As the complexing agent, any material can be used without being particularly restricted so long as it has the above-mentioned properties, and preferably, a specific complexing agent such as the above-mentioned complexing agents (i) to (iv) can be used. These specific complexing agents have a functional group structure containing a hetero atom such as a nitrogen atom or an oxygen atom in the molecule, and can readily coordinate (bond) to a lithium atom as mentioned above. Consequently, these specific complexing agents have an improved affinity with a lithium atom, and can readily form a complex with a lithium atom.

Regarding the complexing agent, the functional group and the structure containing a hetero atom such as a nitrogen atom or an oxygen atom in the molecule thereof have a high affinity with a lithium atom, and it is considered that the complexing agent has such a property that can readily form a lithium-containing structure such as $Li_3PS_4$ typically containing a $PS_4$ structure existing as a main structure in the solid electrolyte obtained according to the production method of the present embodiment, or an aggregate bonding to a lithium-containing raw material such as a lithium halide. For that reason, since by mixing the above-mentioned solid electrolyte raw material and the above-mentioned complexing agent having a specific structure, an aggregate via the lithium-containing structure, such as a $PS_4$ structure, or the complexing agent, and an aggregate via the lithium-containing raw material, such as a lithium halide, or the complexing agent are evenly existent, whereby an electrolyte precursor in which the halogen atom is more likely dispersed and fixed is obtained, and as a result, it may be considered that a solid electrolyte having a high ionic conductivity and capable of suppressing hydrogen sulfide generation can be obtained. Hereinunder the specific complexing agents (i) to (iv) preferably used in the present invention are described in order.

(Complexing agent (i))

The complexing agent (i) is a heterocyclic compound having a hetero ring that contains 2 or more hetero atoms. Having hetero atoms, the complexing agent (i) can readily give an electrolyte precursor as mentioned above, and using this, a solid electrolyte having a high ionic conductivity and capable of suppressing hydrogen sulfide generation can be obtained.

In addition, the complexing agent (i) has a heterocyclic structure, and therefore in this, reaction to form a complex between at least 2 hetero atoms that the hetero ring has and a lithium atom and decomposition of the complex owing to steric hindrance by the heterocyclic structure can occur in a balanced manner, and accordingly, an aggregate via the lithium-containing structure, such as a $PS_4$ structure, or the complexing agent, and an aggregate via the lithium-containing raw material, such as a lithium halide, or the complexing agent are evenly existent, and a solid electrolyte precursor can be readily formed, and as a result, it is considered that the solid electrolyte obtained according to the production method of the present embodiment can be a solid electrolyte having an improved ionic conductivity. The above-mentioned matters may be referred to as "the effect of using the complexing agent (i)".

The hetero atom that the complexing agent (i) has includes an oxygen atom, a nitrogen atom, a chlorine atom, a phosphorus atom and a sulfur atom, from the viewpoint of readily obtaining the effect of using the complexing agent (i). An oxygen atom, a nitrogen atom, a chlorine atom and a phosphorus atom are preferred, and an oxygen atom and a nitrogen atom are more preferred. Two or more hetero atoms in the agent may be the same or different. Preferably, the agent has different hetero atoms, and a combination of an oxygen atom and a nitrogen atom is preferred.

The number of the hetero atoms that the complexing agent (i) has is, from the viewpoint of readily obtaining the effect of using the complexing agent (i), generally 2 or more, and is preferably 6 or less, more preferably 4 or less, even more preferably 3 or less. From the above-mentioned viewpoint, the number is most preferably 2.

Preferably, the hetero ring has hetero atoms not neighboring to each other, in consideration of easiness in obtaining the effect of using the complexing agent (i). Specifically, it is preferable that, among two or more hetero atoms, at least two hetero atoms bond via a carbon atom. For example, a 4-membered hetero ring having two hetero atoms in which the two hetero atoms bond via a carbon atoms includes a ring (a) having the atoms in an order of one hetero atom, a carbon atom, another hetero atom and a carbon atom, or a ring (b) having the atoms in an order of one hetero atom, a carbon atom, a carbon atom and another hetero atom. Regarding these, a ring such as ring (a) in which the two hetero atoms both have a carbon atom at both sides thereof is preferred.

In the case where at least two hetero atoms bond via carbon atom(s), the number of the carbon atom(s) is, though not indiscriminately defined irrespective of the number of the atoms constituting the hetero ring but in consideration of easiness in obtaining the effect of using the complexing agent (i), preferably 1 or more,

more preferably 2 or more, and the upper limit is preferably 5 or less, more preferably 4 or less, even more preferably 3 or less, further more preferably 2 or 3.

The hetero ring of the complexing agent (i) may be any of a monocyclic hetero ring, a bicyclic hetero ring, a tricyclic hetero ring, or a polycyclic hetero ring having 4 or more rings, but in consideration of easiness in obtaining the effect of using the complexing agent (i) and availability, a monocyclic hetero ring is preferred.

From the same viewpoint as above, the hetero ring is preferably 3-membered or more, more preferably 4-membered or more, even more preferably 5-membered or more, and the upper limit is preferably 12-membered or less, more preferably 10-membered or less, even more preferably 8-membered or less, further more preferably 6-membered or less.

From the same viewpoint as above, representative examples of the monocyclic hetero ring having two or more hetero atoms, which is preferably employed in the present embodiment, include a 3-membered ring, such as a nitrogen-containing 3-membered ring such as a diaziridine ring, a diazirine ring, and a diazirene ring, a nitrogen atom/oxygen atom-containing 3-membered ring such as an oxazolidone ring, and an oxazoline ring, and an oxygen atom-containing 3-membered ring such as a dioxirane ring; a 4-membered ring, such as a nitrogen atom-containing 4-membered ring such as a diazetidine ring, a diazeto ring, a triazetidine ring, and a triazeto ring, an oxygen atom-containing 4-membered ring such as a dioxetane ring, and a dioxeto ring and a sulfur atom-containing 4-membered ring such as a dithietane ring, and a dithieto ring; a 5-membered ring, such as a nitrogen atom-containing 5-membered ring such as a pyrazolidine ring, a pyrazoline ring, a pyrazole ring, an imidazolidine ring, an imidazoline ring, an imidazole ring, a triazolidine ring, a triazoline ring, a triazole ring, a tetrazolidine ring, a tetrazoline ring, a tetrazole ring, and a pentazole ring, a nitrogen atom/oxygen atom-containing 5-membered ring such as an oxazolidone ring, an oxazoline ring, a furazan ring, and an oxadiazole ring, a nitrogen atom-sulfur atom-containing 5-membered ring such as a thiazolidine ring, a thiazoline ring, a thiadiazole ring, and a dithiazole ring, an oxygen-containing 5-membered ring such as a dioxolane ring, and a sulfur atom-containing 5-membered ring such as a dithiolane ring; a 6-membered ring, such as a nitrogen atom-containing 6-membered ring such as a piperazine ring, a pyridazine ring, a pyrimidine ring, a pyrazine ring, a triazinane ring, a triazine ring, a tetrazinane ring, a tetrazine ring, a penazinane ring, and a pentazine ring, a nitrogen atom/oxygen atom-containing 6-membered ring such as a morpholine ring, and an oxazine ring, a nitrogen atom/sulfur atom-containing 6-membered ring such as a thiomorpholine ring, and a thiazine ring, an oxygen atom-containing 6-membered ring such as a dioxane ring, and a dioxin ring, and a sulfur atom-containing 6-membered ring such as a dithiane ring, and a dithiin ring; a 7-membered ring, such as a nitrogen atom-containing 7-membered ring such as a diazepane ring, and a diazepine ring, a nitrogen atom/sulfur atom-containing 7-membered ring such as a thiazepine ring, and a sulfur atom-containing 7-membered ring such as a dithiepane ring, and a trithiepane ring; an 8-membered ring, such as a nitrogen atom-containing 8-membered ring such as a diazocane ring, an oxygen atom-containing 8-membered ring such as a dioxoxane ring, and a trioxocane ring, and a sulfur atom-containing 8-membered ring such as a dithiocane ring, and a trithiocane ring; and a nitrogen-containing 9-membered ring such as a diazonane ring, and a diazonine ring.

Hetero rings having a trivial name are mainly exemplified, but the hetero rings employable in the present embodiment are not limited to these exemplified hetero rings. For example, a triazolidine ring as referred to herein includes isomers thereof such as a 1,2,3-triazolidine ring and a 1,2,4-triazolidine ring.

Among the above-mentioned hetero rings, 6-membered rings are especially preferred as so mentioned above, 6-membered rings containing a nitrogen atom and an oxygen atom (nitrogen atom/oxygen atom-containing 6-membered rings) are preferred, and a morpholine ring is preferred. "Morpholine" of the morpholine ring may be generally called tetrahydro-1,4-oxazine, and includes isomers of tetrahydro-1,2-oxazine and tetrahydro-1,3-oxazine. The morpholine ring in the complexing agent (i) may be any one of such isomers, but is especially preferably tetrahydro-1,4-oxazine that is generally called morpholine.

The complexing agent (i) may be any heterocyclic compound having the above-mentioned hetero ring. A heterocyclic compound of the hetero ring itself, as well as a heterocyclic compound prepared by adding an aliphatic hydrocarbon group such as an alkyl group or an alkenyl group to the hetero ring, or by adding the above-mentioned hetero atom, or a hetero atom-containing group containing the above-mentioned hetero atom such as a hydroxy group thereto can also be employed. Above all, an aliphatic hydrocarbon group-added heterocyclic compound is preferred, and an alkyl group-added heterocyclic compound is more preferred. These groups may be added to the carbon atom in the heterocyclic compound, or may be added to the hetero atom therein, but are preferably added to the hetero atom from the viewpoint of easiness in obtaining the effect of using the complexing agent (i).

The carbon number of the aliphatic hydrocarbon group is preferably 1 or more, and the upper limit thereof is preferably 12 or less, more preferably 8 or less, even more preferably 4 or less, further more preferably 2 or less. The hydrocarbon group may be linear or branched.

Especially preferred compounds for the complexing agent (i) are, from the viewpoint of easiness in obtaining the effect of using the complexing agent (i), a morpholine ring, a piperazine ring and a piperidine ring themselves, that is, morpholine, piperazine and piperidine, as well as amine compounds that may be referred

to as "heterocyclic amines", such as compounds prepared by adding an aliphatic hydrocarbon group to these rings (the compounds may be referred to as "morpholine compound", "piperazine compound" and "piperidine compound", respectively). Above all, morpholine and morpholine compounds prepared by adding an aliphatic hydrocarbon group to morpholine, and piperazine and piperazine compounds prepared by adding an aliphatic hydrocarbon group to piperazine are preferred, a morpholine compound prepared by adding an alkyl group to morpholine, and a piperazine compound prepared by adding an alkyl group to piperazine are more preferred, a morpholine compound prepared by adding an alkyl group to the nitrogen atom of a morpholine ring, and a piperazine compound prepared by adding an alkyl group to the nitrogen atom of a piperazine ring are even more preferred, and a piperazine compound prepared by adding an alkyl group to all the nitrogen atoms of a piperazine ring, such as N-methylmorpholine (especially N-methyltetrahydro-1,4-dioxazine) or N,N'-dimethylpiperazine is most preferred.

One alone or plural kinds mentioned above may be used for the complexing agent (i) either singly or as combined.

(Complexing Agent (ii))

The complexing agent (ii) is a complexing agent having an amino group and a nitrile group. The complexing agent (ii) has a nitrogen atom as a hetero atom, and therefore with this, an electrolyte precursor is easy to obtain as mentioned above, and a solid electrolyte having a high ionic conductivity can be obtained.

In addition, the agent has different hetero atom-containing functional groups, and therefore, when the two hetero atoms and a lithium atom form a complex, decomposition of the complex can occur in a balanced manner depending on the different functional groups used, and accordingly like the case of using the above-mentioned complexing agent, as a result, it is considered that the solid electrolyte to be produced according to the production method of the present invention using the complexing agent (ii) can be a solid electrolyte having an increased ionic conductivity. The above-mentioned matters may be referred to as "the effect of using the complexing agent (ii)".

So far as having an amino group and a nitrile group, the complexing agent (ii) is not specifically limited in point of the other structure, but in consideration of easiness in obtaining the effect of using the complexing agent (ii), an acyclic compound not having a cyclic structure such as a cyclo ring, an aromatic ring or a hetero ring in the molecule is preferred, and especially an acyclic aliphatic compound is preferred.

The amino group that the complexing agent (ii) has may be any of a primary amino group, a secondary amino group or a tertiary amino group. In consideration of easiness in obtaining the effect of using the complexing agent (ii), a secondary amino group or a tertiary amino group is preferred, and a tertiary amino group is more preferred.

Examples of the amino group that the complexing agent (ii) can have include one represented by the following general formula (1).

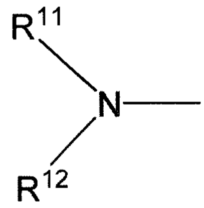
(1)

In the general formula (1), $R^{11}$ and $R^{12}$ each independently represent a hydrogen atom or an organic group.

The organic group of $R^{11}$ and $R^{12}$ includes an aliphatic hydrocarbon group, an alicyclic hydrocarbon group, an aromatic hydrocarbon group, and a heterocyclic group, and in consideration of easiness in obtaining the effect of using the complexing agent (ii) and availability, an aliphatic hydrocarbon group is preferred. In the case where $R^{11}$ and $R^{12}$ each are an organic group, $R^{11}$ and $R^{12}$ may be the same or different, and in consideration of availability, the two are preferably the same.

The aliphatic hydrocarbon group includes an alkyl group and an alkenyl group, and in consideration of easiness in obtaining the effect of using the complexing agent (ii) and availability, an alkyl group is preferred.

From the same viewpoint, the carbon number of the aliphatic hydrocarbon group is, in the case of an alkyl group, preferably 1 or more, and the upper limit is preferably 12 or less, more preferably 8 or less, even more preferably 4 or less, further more preferably 2 or less. In the case of an alkenyl group, the carbon number is preferably 2 or more, and the upper limit is preferably 12 or less, more preferably 8 or less, even more preferably 4 or less, further more preferably 2. The aliphatic hydrocarbon group may be linear or branched, but is preferably linear.

As mentioned above, the amino group is preferably a secondary amino group or a tertiary amino group, and ore preferably a tertiary amino group. Accordingly, at least any one of $R^{11}$ and $R^{12}$ is preferably an organic group, and more preferably, both $R^{11}$ and $R^{12}$ are organic groups.

The complexing agent (ii) is preferably a compound represented by the following general formula (2).

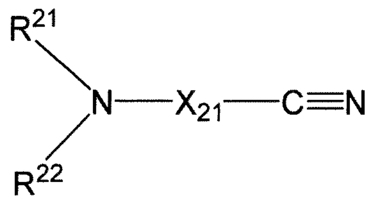
(2)

In the general formula (2), $R^{21}$ and $R^{22}$ each independently represent a hydrogen atom or an organic group, and $X_{21}$ represents a single bond or an organic group.

The organic group of $R^{21}$ and $R^{22}$ includes the same ones as those of the above-mentioned $R^{11}$ and $R^{12}$, and preferred embodiments thereof are also the same of $R^{11}$ and $R^{12}$.

The organic group of $X_{21}$ includes an aliphatic hydrocarbon group, an alicyclic hydrocarbon group, an aromatic hydrocarbon group, and a heterocyclic group, and in consideration of easiness in obtaining the effect of using the complexing agent (ii) and availability, an aliphatic hydrocarbon group is preferred. Preferred examples of the aliphatic hydrocarbon group of $X_{21}$ include an alkylene group and an alkenylene group, and an alkylene group is preferred. The carbon number of the aliphatic hydrocarbon group is, in the case of an alkylene group, preferably 1 or more, and the upper limit is preferably 12 or less, more preferably 8 or less, even more preferably 4 or less, further more preferably 2 or less. The organic group of $X_{21}$ is especially preferably a methylene group (methyl-1,1-diyl group) or an ethylene group (ethyl-1,2-diyl group).

The aliphatic hydrocarbon group may be linear or branched, but is preferably linear in consideration of easiness in obtaining the effect of using the complexing agent (ii) and availability. Also preferably, the complexing agent (ii) does not have a branched organic group, that is, a compound not having a branched structure is preferred.

Especially preferred examples of the complexing agent (ii) include N,N-dimethylaminoacetonitrile of the general formula (2) where $R^{21}$ and $R^{22}$ are methyl groups and $X_{21}$ is a methylene group (methyl-1,1-diyl group), N,N-diethylaminoacetonitrile where $R^{21}$ and $R^{22}$ are ethyl groups and $X_{21}$ is a methylene group (methyl-1,1-diyl group), and N,N-dimethylaminopropionitrile where $R^{21}$ and $R^{22}$ are methyl groups and $X_{21}$ is an ethylene group (ethyl-1,2-diyl group).

One alone or plural kinds may be used for the complexing agent (ii) either singly or as combined.

(Complexing Agent (iii))

The complexing agent (iii) is a complexing agent having an alkenyl group and an ether group. The complexing agent (iii) has a hetero atom, and therefore with this, an electrolyte precursor is easy to obtain as mentioned above, and a solid electrolyte having a high ionic conductivity can be obtained.

In addition, the agent has an unsaturated group of an alkenyl group, and with this, therefore, reaction to form a complex with an ether group and decomposition of the complex can occur in a balanced manner. Therefore like in the case of using the above-mentioned complexing agent, as a result, it is considered that the solid electrolyte to be produced according to the production method of the present invention can be a solid electrolyte having an increased ionic conductivity.

The above-mentioned matters may be referred to as "the effect of using the complexing agent (iii)".

So far as having an alkenyl group and an ether group, the complexing agent (iii) is not specifically limited in point of the other structure, but in consideration of the fact that the effect of using the complexing agent (iii) can be obtained when the agent has both an alkenyl group and an ether group and also in consideration of easiness in obtaining that effect, an acyclic compound not having a cyclic structure such as a cyclo ring, an aromatic ring or a hetero ring in the molecule is preferred, and especially an acyclic aliphatic compound is preferred.

The carbon number of the alkenyl group that the complexing agent (iii) has is, in consideration of easiness in obtaining the effect of using the complexing agent (iii), preferably 2 or more, more preferably 3 or more, and the upper limit thereof is preferably 12 or less, more preferably 8 or less even more preferably 4 or less, especially preferably 3.

From the same viewpoint, the number of the alkenyl groups that the complexing agent (iii) has is preferably 2 or more, and the upper limit is preferably 4 or less, more preferably 3 or less, especially preferably 2. In the case where the agent has plural alkenyl groups, the plural alkenyl groups may be the same or different, but in consideration availability, they are the same.

The complexing agent (iii) is preferably a compound represented by the following general formula (3).

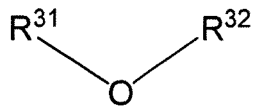 (3)

In the general formula (3), $R^{31}$ and $R^{32}$ each independently represent a hydrogen atom, an alkenyl group, or an organic group, and at least one of $R^{31}$ and $R^{32}$ is an alkenyl group.

The alkenyl group of $R^{31}$ and $R^{32}$ is as mentioned above, and at least one of these is an alkenyl group.

The alkenyl group may be linear or branched, and in consideration of easiness in obtaining the effect of using the complexing agent (iii), a linear one preferred.

The organic group of $R^{31}$ and $R^{32}$ includes an alkyl group, an alicyclic hydrocarbon group, an aromatic hydrocarbon group, and a heterocyclic group, and in consideration of easiness in obtaining the effect of using the complexing agent (iii) and availability, an alkyl group is preferred.

The complexing agent (iii) preferably has an unsaturated bond at the terminal thereof in consideration of easiness in obtaining the effect of using the complexing agent (iii), and preferably has a double bond at both terminals thereof.

Especially preferred examples of the complexing agent (iii) include ethyl propenyl ether, isopropenyl methyl ether, diallyl ether, butenyl propenyl ether, methyl butenyl ether, ethyl butenyl ether, and dibutenyl ether. Diallyl ether is preferred, and above all, diallyl ether (4-oxa-1,6-heptadiene) having an unsaturated group at both terminals is preferred.

One alone or plural kinds may be used for the complexing agent (iii) either singly or as combined.

(Complexing Agent (iv))

The complexing agent (iv) is a complexing agent having an amino group and a branched structure. The complexing agent (iv) has a nitrogen atom as a hetero atom, and therefore with this, an electrolyte precursor is easy to obtain as mentioned above, and a solid electrolyte having a high ionic conductivity can be obtained.

In addition, the agent has a branched structure, and with this, therefore, reaction to form a complex between the nitrogen atom-having amino group and a lithium atom and decomposition of the complex owing to steric hindrance can occur in a balanced manner. Therefore like in the case of using the above-mentioned complexing agent, as a result, it is considered that the solid electrolyte to be produced according to the production method of the present invention can be a solid electrolyte having an increased ionic conductivity.

The above-mentioned matters may be referred to as "the effect of using the complexing agent (iv)".

So far as having an amino group and a branched structure, the complexing agent (iv) is not specifically limited in point of the other structure, but in consideration of easiness in obtaining the effect of using the complexing agent (iv), an acyclic compound not having a cyclic structure such as a cyclo ring, an aromatic ring or a hetero ring in the molecule is preferred, and especially an acyclic aliphatic compound is preferred.

The amino group that the complexing agent (iv) has may be any of a primary amino group, a secondary amino group or a tertiary amino group. In consideration of easiness in obtaining the effect of using the complexing agent (iv), a secondary amino group or a tertiary amino group is preferred, and especially in consideration of the balance in the total of complex decomposition owing to steric hindrance of the branched structure, a secondary amino group is more preferred.

In consideration of easiness in obtaining the effect of using the complexing agent (iv) by making the complexing agent (iv) have suitable steric hindrance, the number of the branched structure in the molecule is preferably 1 or more, more preferably 2 or more, and the upper limit is preferably 8 or less, more preferably 4 or less, even more preferably 3 or less further more preferably 2. From the same viewpoint, preferably, the complexing agent (iv) has a branched structure at the terminal thereof, also preferably at both terminals.

The complexing agent (iv) is preferably a compound represented by the following general formula (4).

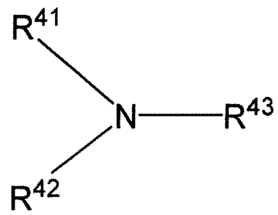
(4)

In the general formula (4), $R^{41}$, $R^{42}$ and $R^{43}$ each independently represent a hydrogen atom or an organic group, and at least any of $R^{41}$, $R^{42}$ and $R^{43}$ is an organic group.

The organic group of $R^{41}$, $R^{42}$ and $R^{43}$ includes an aliphatic hydrocarbon group, an alicyclic hydrocarbon group, an aromatic hydrocarbon group and a heterocyclic group, and in consideration of easiness in obtaining the effect of using the complexing agent (iv) and availability, an aliphatic hydrocarbon group is preferred. In the case where any two or more of $R^{41}$, $R^{42}$ and $R^{43}$ are organic groups, the organic groups of two or more $R^{41}$, $R^{42}$ and $R^{43}$ may be the same or different, and in consideration of availability, they are preferably the same.

As described above, the complexing agent (iv) is preferably a secondary amino group or a tertiary amino group, more preferably a secondary amino group, and therefore, at least one of $R^{41}$, $R^{42}$ and $R^{43}$ is preferably an organic group, and more preferably two of these are organic groups.

The aliphatic hydrocarbon group includes an alkyl group and an alkenyl group, and in consideration of easiness in obtaining the effect of using the complexing agent (iv) and availability, an alkyl group is preferred. The carbon number of the aliphatic hydrocarbon group in the case of an alkyl group is, in consideration of easiness in obtaining the effect of using the complexing agent (iv) and availability, preferably 1 or more, more preferably 2 or more, even more preferably 3 or more, and the upper limit is preferably 12 or less, more preferably 8 or less, even more preferably 6 or less, further more preferably 4 or less. From the same viewpoint, the carbon number in the case of an alkenyl group is preferably 2 or more, more preferably 3 or more, and the upper limit is preferably 12 or less, more preferably 8 or less even more preferably 4 or less.

Especially preferred examples of the alkyl group in the present embodiment include an isopropyl group (1-methylethyl group), a sec-butyl group (1-methylpropyl group), a tert-butyl group (1,1-dimethylethyl group), and an isobutyl group (2-methylpropyl group). Above all, an isopropyl group (1-methylethyl group), and a tert-butyl group (1,1-dimethylethyl group) are preferred.

The aliphatic hydrocarbon group may be linear or branched, and in consideration of easiness in obtaining the effect of using the complexing agent (iv), at least one of $R^{41}$, $R^{42}$ and $R^{43}$ is preferably branched, and more preferably two of these are branched.

Also from the same viewpoint as above, the complexing agent (iv) preferably has a branched structure at the terminal thereof, more preferably has a branched structure at both terminals. In the case where the agent has a branched structure at both terminals, the terminals may be the same or different, but in consideration of easiness in obtaining the effect of using the complexing agent (iv) and availability, they are preferably the same.

In the case where the complexing agent (iv) is, for example, represented by the general formula (4) where $R^{41}$, $R^{42}$ and $R^{43}$ each are an alkyl group as exemplified for preferred examples of an alkyl group hereinabove, that is, an isopropyl group (1-methylethyl group), a sec-butyl group (1-methylpropyl group), a tert-butyl group (1,1-dimethylethyl group), or an isobutyl group (2-methylpropyl group), the terminals of the complexing agent each have an isopropyl group (1-methylethyl group), a sec-butyl group (1-methylpropyl group), a tert-butyl group (1,1-dimethylethyl group), or an isobutyl group (2-methylpropyl group).

Especially preferred compounds for the complexing agent (iv) are those having an amino group and having an isopropyl group or a tert-butyl group at the terminal, more preferably those having an amino group and having an isopropyl group or a tert-butyl group at both terminals, even more preferably those in which the isopropyl group or the tert-butyl group at both terminals bond to a nitrogen atom, that is, diisopropylamine and diisobutylamine of the general formula (4) where two of $R^{41}$, $R^{42}$ and $R^{43}$ each are an isopropyl group or a tert-butyl group and the remaining one is a hydrogen atom.

One alone or plural kinds may be used for the complexing agent (iv) either singly or as combined.

(Other Complexing Agents)

Other complexing agents than the above-mentioned complexing agents include compounds having a group that contains a hetero atom such as an oxygen atom, a nitrogen atom or a chlorine atom, and these compounds have a high affinity with a lithium atom and are usable as other complexing agent than the above-mentioned complexing agents.

Examples of the other complexing agents include alcohol-based solvents, such as ethanol and butanol; ester-based solvents, such as ethyl acetate and butyl acetate; aldehyde-based solvents, such as formaldehyde, acetaldehyde, and dimethylformamide; ketone-based solvents, such as acetone and methyl ethyl ketone; ether-based solvents, such as diethyl ether, diisopropyl ether, dibutyl ether, tetrahydrofuran, dimethoxyethane, cyclopentyl methyl ether, tert-butyl methyl ether, and anisole; halogen atom-containing aromatic hydrocarbon solvents, such as trifluoromethylbenzene, nitrobenzene, chlorobenzene, chlorotoluene, and bromobenzene; amine-based solvents, such as tetramethylethylenediamine, tetraethylethylenediamine, tetramethyldiaminopropane, tetraethyldiaminopropane, cyclopropanediamine, tolylenediamine, and tetraethylenepentamine; and solvents containing a carbon atom and a hetero atom, such as acetonitrile, dimethyl sulfoxide, and carbon disulfide. Of these, ether-based solvents are preferred; diethyl ether, diisopropyl ether, dibutyl ether, and tetrahydrofuran are more preferred; and diethyl ether, diisopropyl ether, and dibutyl ether are still more preferred.

One alone or plural kinds of the other complexing agents mentioned above can be used either singly or as combined.

(Mixing)

As shown in the flow chart of Fig. 1, the solid electrolyte raw material and the complexing agent, preferably the above-mentioned specific complexing agent are mixed. In the present embodiment, though a mode of mixing the solid electrolyte raw material and the complexing agent may be in any of a solid state and a liquid state, in general, the solid electrolyte raw material is in a solid state, whereas the complexing agent is in a liquid state, and therefore, in general, mixing is made in a mode in which the solid electrolyte raw material is existent in the liquid complexing agent.

The content of the solid electrolyte raw material is preferably 5 g or more, more preferably 10 g or more, still more preferably 30 g or more, and yet still more preferably 50 g or more relative to the amount of one liter of the complexing agent, and an upper limit thereof is preferably 500 g or less, more preferably 400 g or less, still more preferably 300 g or less, and yet still more preferably 250 g or less. When the content of the solid electrolyte raw material falls within the above-mentioned range, the solid electrolyte raw material is readily mixed, the dispersing state of the raw materials is enhanced, and the reaction among the raw materials is promoted, and therefore, the electrolyte precursor and further the solid electrolyte are readily efficiently obtained.

A method for mixing the solid electrolyte raw material and the complexing agent is not particularly restricted, and the raw materials contained in the solid electrolyte raw material and the complexing agent may be charged in an apparatus capable of mixing the solid electrolyte raw material and the complexing agent and mixed. For example, by feeding the complexing agent into a tank, actuating an impeller, and then gradually adding the raw materials, a favorable mixing state of the solid electrolyte raw material is obtained, and dispersibility of the raw materials is enhanced, and thus, such is preferred.

In the case of using a halogen simple substance as the raw material, there is a case where the raw material is not a solid. Specifically, fluorine and chlorine are a gas, and bromine is a liquid under normal temperature and normal pressure. For example, in the case where the raw material is a liquid, it may be fed into the tank separately from the other raw materials together with the complexing agent, and in the case where the raw material is a gas, the raw material may be fed such that it is blown into the

complexing agent having the solid raw materials added thereto.

The production method for a solid electrolyte of the present embodiment is characterized by including mixing the solid electrolyte raw material and the complexing agent, and the electrolyte precursor can also be produced by a method not using an instrument to be used for the purpose of pulverization of solid raw materials, which is generally called a pulverizer, such as a medium type pulverizer, e.g., a ball mill and a bead mill. According to the production method for a solid electrolyte of the present embodiment, by merely mixing the solid electrolyte raw material and the complexing agent, the raw materials and the complexing agent are mixed, whereby the electrolyte precursor can be formed. In view of the fact that a mixing time for obtaining the electrolyte precursor can be shortened, or atomization can be performed, the mixture of the solid electrolyte raw material and the complexing agent may be pulverized by a pulverizer.

Examples of an apparatus for mixing the solid electrolyte raw material and the complexing agent include a mechanical agitation type mixer having an impeller provided in a tank. Examples of the mechanical agitation type mixer include a high-speed agitation type mixer and a double arm type mixer, and a high-speed agitation type mixer is preferably used from the viewpoint of increasing the homogeneity of raw materials in the mixture of the solid electrolyte raw material and the complexing agent and obtaining a higher ionic conductivity. In addition, examples of the high-speed agitation type mixer include a vertical axis rotating type mixer and a lateral axis rotating type mixer, and mixers of any of these types may be used.

Examples of a shape of the impeller which is used in the mechanical agitation type mixer include a blade type, an arm type, a ribbon type, a multistage blade type, a double arm type, a shovel type, a twin-shaft blade type, a flat blade type, and a C type blade type. From the viewpoint of increasing the homogeneity of raw materials in the solid electrolyte raw material and obtaining a higher ionic conductivity, a shovel type, a flat blade type, a C type blade type are preferred.

A temperature condition on the occasion of mixing the solid electrolyte raw material and the complexing agent is not particularly limited, and for example, it is -30 to 100°C, preferably -10 to 50°C, and more preferably around room temperature (23°C) (for example, (room temperature) ± about 5°C). In addition, a mixing time is about 0.1 to 150 hours, and from the viewpoint of more uniformly mixing the solid electrolyte raw material and the complexing agent and obtaining a higher ionic conductivity, the mixing time is preferably 1 to 120 hours, more preferably 4 to 100 hours, and still more preferably 8 to 80 hours.

By mixing the solid electrolyte raw material and the complexing agent, owing to an action of the lithium atom, the sulfur atom, the phosphorus atom, and the halogen atom, all of which are contained in the raw materials, with the complexing agent, an electrolyte precursor in which these atoms are bound directly with each other via and/or not via the complexing agent is obtained. That is, in the production method for a solid electrolyte of the present embodiment, the electrolyte precursor obtained through mixing of the solid electrolyte raw material and the complexing agent is constituted of the complexing agent, the lithium atom, the sulfur atom, the phosphorus atom, and the halogen atom, and by mixing the solid electrolyte raw material and the complexing agent, a material containing the electrolyte precursor (hereinafter sometimes referred to as "electrolyte precursor inclusion") is obtained. In the present embodiment, the resulting electrolyte precursor is not one completely dissolved in the complexing agent that is a liquid, and typically, a suspension containing the electrolyte precursor that is a solid is obtained. In consequence, the present production method of a solid electrolyte of the present embodiment is corresponding to a heterogeneous system in a so-called liquid-phase method.

(Drying)

The production method for a solid electrolyte of the present embodiment may include drying of the electrolyte precursor inclusion (typically, suspension). According to this, a powder of the electrolyte precursor is obtained. By performing drying in advance, it becomes possible to efficiently perform heating. The drying and the subsequent heating may be performed in the same process.

The electrolyte precursor inclusion can be dried at a temperature according to the kind of the remaining complexing agent (complexing agent not incorporated into the electrolyte precursor). For example, the drying can be performed at a temperature of a boiling point of the complexing agent or higher. In addition, the drying can be performed through drying under reduced pressure (vacuum drying) by using a vacuum pump at typically 5 to 100°C, preferably 10 to 85°C, more preferably 15 to 70°C, and still more preferably around room temperature (23°C) (for example, (room temperature) ± about 5°C), to volatilize the complexing agent.

The drying may be performed by subjecting the electrolyte precursor inclusion to solid-liquid separation by means of filtration with a glass filter, or decantation, or solid-liquid separation with a centrifuge. In the present embodiment, after performing the solid-liquid separation, the drying may be performed under the above-mentioned temperature condition.

Specifically, for the solid-liquid separation, decantation in which the electrolyte precursor inclusion is transferred into a container, and after the electrolyte precursor is precipitated, the complexing agent and solvent as a supernatant are removed, or filtration with a glass filter having a pore size of, for example, about 10 to 200 μm, and preferably 20 to 150 μm, is easy.

The electrolyte precursor is constituted of the

complexing agent, a lithium atom, a sulfur atom, a phosphorus atom, and a halogen atom. In the X-ray diffraction pattern in the X-ray diffractometry, peaks different from the peaks derived from the raw materials may be observed depending on the drying temperature. In the present embodiment, the electrolyte precursor preferably contains a co-crystal constituted of the complexing agent, a lithium atom, a sulfur atom, a phosphorus atom, and a halogen atom.

The electrolyte precursor (co-crystal) is characterized by having a structure different from that of the solid electrolyte.

The co-crystal is constituted of the complexing agent, a lithium atom, a sulfur atom, a phosphorus atom, and a halogen atom, and typically, it may be presumed that a complex structure in which a lithium atom and other atoms are bound directly with each other via and/or not via the complexing agent is formed.

Here, the fact that the complexing agent constitutes the co-crystal can be, for example, confirmed through gas chromatography analysis. Specifically, the complexing agent contained in the co-crystal can be quantitated by dissolving a powder of the electrolyte precursor in methanol and subjecting the obtained methanol solution to gas chromatography analysis.

In the production method for a solid electrolyte of the present embodiment, what the co-crystal containing a halogen atom is formed is preferred from the viewpoint of enhancing the ionic conductivity. By using the complexing agent, the lithium-containing structure, such as a $PS_4$ structure, and the lithium-containing raw materials, such as a lithium halide, are bound (coordinated) with each other via the complexing agent, the co-crystal in which a halogen atom is more likely dispersed and fixed is readily obtained, and the ionic conductivity is enhanced.

The matter that the halogen atom in the electrolyte precursor constitutes the co-crystal can be confirmed from the fact that even when the solid-liquid separation of the electrolyte precursor inclusion is performed, the predetermined amount of the halogen atom is contained in the electrolyte precursor. This is because the halogen atom which does not constitute the co-crystal is easily eluted as compared with the halogen atom constituting the co-crystal and discharged into the liquid of solid-liquid separation. In addition, the foregoing matter can also be confirmed from the fact that by performing composition analysis through ICP analysis (inductively coupled plasma atomic emission spectrophotometry) of the electrolyte precursor or solid electrolyte, a proportion of the halogen atom in the electrolyte precursor or solid electrolyte is not remarkably lowered as compared with a proportion of the halogen atom fed from the raw materials.

The amount of the halogen atom remaining in the electrolyte precursor is preferably 30% by mass or more, more preferably 35% by mass or more, and still more preferably 40% by mass or more relative to the charged composition. An upper limit of the halogen atom remaining in the electrolyte precursor is 100% by mass.

(Heating)

It is preferred that the production method for a solid electrolyte of the present embodiment includes heating of the electrolyte precursor to obtain the amorphous solid electrolyte; and heating of the electrolyte precursor or amorphous solid electrolyte to obtain the crystalline solid electrolyte. In view of the fact that heating of the electrolyte precursor is included, the complexing agent in the electrolyte precursor is removed, and the amorphous solid electrolyte and the crystalline solid electrolyte each containing a lithium atom, a sulfur atom, a phosphorus atom, and a halogen atom are obtained. Here, the fact that the complexing agent in the electrolyte precursor is removed is supported by the facts that in addition to the fact that it is evident from the results of the X-ray diffraction pattern, the gas chromatography analysis that the complexing agent constitutes the co-crystal of the electrolyte precursor, the solid electrolyte obtained by removing the complexing agent through heating of the electrolyte precursor is identical in the X-ray diffraction pattern with the solid electrolyte obtained by the conventional method without using the complexing agent.

In the production method of the present embodiment, the solid electrolyte is obtained by heating the electrolyte precursor to remove the complexing agent in the electrolyte precursor, and it is preferred that the content of the complexing agent in the solid electrolyte is low as far as possible. However, the complexing agent may be contained to an extent that the performance of the solid electrolyte is not impaired. The content of the complexing agent in the solid electrolyte may be typically 10% by mass or less, and it is preferably 5% by mass or less, more preferably 3% by mass or less, and still more preferably 1% by mass or less.

In the production method of the present embodiment, in order to obtain the crystalline solid electrolyte, it may be obtained by heating the electrolyte precursor, or it may be obtained by heating the electrolyte precursor to obtain the amorphous solid electrolyte and then heating the amorphous solid electrolyte. That is, in the production method of the present embodiment, the amorphous solid electrolyte can also be produced.

In the production method for a solid electrolyte of the present embodiment, whether or not the amorphous solid electrolyte is obtained, whether or not the crystalline solid electrolyte is obtained, whether or not after obtaining the amorphous solid electrolyte, the crystalline solid electrolyte is obtained, or whether or not the crystalline solid electrolyte is obtained directly from the electrolyte precursor is appropriately selected according to the desire, and is able to be adjusted by the heating temperature, and the heating time.

For example, in the case of obtaining the amorphous solid electrolyte, the heating temperature of the electrolyte precursor may be determined according to the structure of the crystalline solid electrolyte which is obtained by heating the amorphous solid electrolyte (or the electrolyte precursor). Specifically, the heating temperature may be determined by subjecting the amorphous solid electrolyte (or the electrolyte precursor) to differential thermal analysis (DTA) with a differential thermal analysis device (DTA device) under a temperature rise condition of 10°C/min and adjusting the temperature to a range of preferably 5°C or lower, more preferably 10°C or lower, and still more preferably 20°C or lower starting from a peak top temperature of the exothermic peak detected on the lowermost temperature side. Although a lower limit thereof is not particularly restricted, it may be set to a temperature of about [(peak top temperature of the exothermic peak detected on the lowermost temperature side) - 40°C] or higher. By regulating the heating temperature to such a temperature range, the amorphous solid electrolyte is obtained more efficiently and surely. Although the heating temperature for obtaining the amorphous solid electrolyte cannot be unequivocally prescribed because it varies with the structure of the resulting crystalline solid electrolyte, in general, it is preferably 135°C or lower, more preferably 130°C or lower, and still more preferably 125°C or lower. Although a lower limit of the heating temperature is not particularly limited, it is preferably 50°C or higher, more preferably 70°C or higher, still more preferably 80°C or higher, further more preferably 100°C or higher, especially more preferably 110°C or higher.

In the case of obtaining the crystalline solid electrolyte by heating the amorphous solid electrolyte or directly from the electrolyte precursor, the heating temperature may be determined according to the structure of the crystalline solid electrolyte, and it is preferably higher than the above-mentioned heating temperature for obtaining the amorphous solid electrolyte. Specifically, the heating temperature may be determined by subjecting the amorphous solid electrolyte (or the electrolyte precursor) to differential thermal analysis (DTA) with a differential thermal analysis device (DTA device) under a temperature rise condition of 10°C/min and adjusting the temperature to a range of preferably 5°C or higher, more preferably 10°C or higher, and still more preferably 20°C or higher starting from a peak top temperature of the exothermic peak detected on the lowermost temperature side. Although an upper limit thereof is not particularly restricted, it may be set to a temperature of about [(peak top temperature of the exothermic peak detected on the lowermost temperature side) + 40°C] or lower. By regulating the heating temperature to such a temperature range, the crystalline solid electrolyte is obtained more efficiently and surely. Although the heating temperature for obtaining the crystalline solid electrolyte cannot be unequivocally prescribed because it varies with the structure of the resulting crystalline solid electrolyte, in general, it is preferably 130°C or higher, more preferably 135°C or higher, and still more preferably 140°C or higher. Although an upper limit of the heating temperature is not particularly limited, it is preferably 300°C or lower, more preferably 280°C or lower, and still more preferably 250°C or lower.

Although the heating time is not particularly limited so long as it is a time for which the desired amorphous solid electrolyte or crystalline solid electrolyte is obtained, for example, it is preferably 1 minute or more, more preferably 10 minutes or more, still more preferably 30 minutes or more, and yet still more preferably 1 hour or more. In addition, though an upper limit of the heating time is not particularly restricted, it is preferably 24 hours or less, more preferably 10 hours or less, still more preferably 5 hours or less, and yet still more preferably 3 hours or less.

It is preferred that the heating is performed in an inert gas atmosphere (for example, a nitrogen atmosphere and an argon atmosphere) or in a reduced pressure atmosphere (especially, in vacuum). This is because deterioration (for example, oxidation) of the crystalline solid electrolyte can be prevented from occurring. Although a method for heating is not particularly limited, for example, a method of using a hot plate, a vacuum heating device, an argon gas atmosphere furnace, or a firing furnace can be adopted. In addition, industrially, a lateral dryer or a lateral vibration fluid dryer provided with a heating means and a feed mechanism may be selected according to the heating treatment amount.

(Amorphous Solid Electrolyte)

The amorphous solid electrolyte which is obtained by the production method for a solid electrolyte of the present embodiment contains a lithium atom, a sulfur atom, a phosphorus atom, and a halogen atom. As representative examples thereof, there are preferably exemplified solid electrolytes constituted of lithium sulfide, phosphorus sulfide, and a lithium halide, such as $Li_2S-P_2S_5-LiI$, $Li_2S-P_2S_5-LiCl$, $Li_2S-P_2S_5-LiBr$, and $Li_2S-P_2S_5-LiI-LiBr$; and solid electrolytes further containing other atom, such as an oxygen atom and a silicon atom, for example, $Li_2S-P_2S_5-Li_2O-LiI$ and $Li_2S-SiS_2-P_2S_5-LiI$. From the viewpoint of obtaining a higher ionic conductivity, solid electrolytes constituted of lithium sulfide, phosphorus sulfide, and a lithium halide, such as $Li_2S-P_2S_5-LiI$, $Li_2S-P_2S_5-LiCl$, $Li_2S-P_2S_5-LiBr$, and $Li_2S-P_2S_5-LiI-LiBr$, are preferred.

The kinds of the atoms constituting the amorphous solid electrolyte can be confirmed by, for example, an inductivity coupled plasma optical emission spectrometer (ICP).

In the case where the amorphous solid electrolyte obtained in the production method for a solid electrolyte of the present embodiment is one having at least $Li_2S-P_2S_5$, from the viewpoint of obtaining a higher ionic conductivity, a molar ratio of $Li_2S$ to $P_2S_5$ is preferably (65 to 85)/(15 to 35), more preferably (70 to 80)/(20 to 30), and still more preferably (72 to 78)/(22 to 28).

In the case where the amorphous solid electrolyte obtained in the production method for a solid electrolyte of the present embodiment is $Li_2S$-$P_2S_5$-LiI-LiBr, the total content of lithium sulfide and phosphorus pentasulfide is preferably 60 to 95 mol%, more preferably 65 to 90 mol%, and still more preferably 70 to 85 mol%. In addition, a proportion of lithium bromide relative to the total of lithium bromide and lithium iodide is preferably 1 to 99 mol%, more preferably 20 to 90 mol%, still more preferably 40 to 80 mol%, and especially preferably 50 to 70 mol%.

In the amorphous solid electrolyte obtained in the production method for a solid electrolyte of the present embodiment, a blending ratio (molar ratio) of lithium atom to sulfur atom to phosphorous atom to halogen atom is preferably (1.0 to 1.8)/(1.0 to 2.0)/(0.1 to 0.8)/(0.01 to 0.6), more preferably (1.1 to 1.7)/(1.2 to 1.8)/(0.2 to 0.6)/(0.05 to 0.5), and still more preferably (1.2 to 1.6)/(1.3 to 1.7)/(0.25 to 0.5)/(0.08 to 0.4). In addition, in the case of using a combination of bromine and iodine as the halogen atom, a blending ratio (molar ratio) of lithium atom to sulfur atom to phosphorus atom to bromine to iodine is preferably (1.0 to 1.8)/(1.0 to 2.0)/(0.1 to 0.8)/(0.01 to 3.0)/(0.01 to 0.3), more preferably (1.1 to 1.7)/(1.2 to 1.8)/(0.2 to 0.6)/(0.02 to 0.25)/(0.02 to 0.25), still more preferably (1.2 to 1.6)/(1.3 to 1.7)/(0.25 to 0.5)/(0.03 to 0.2)/(0.03 to 0.2), and yet still more preferably (1.35 to 1.45)/(1.4 to 1.7)/(0.3 to 0.45)/(0.04 to 0.18)/(0.04 to 0.18). By allowing the blending ratio (molar ratio) of lithium atom to sulfur atom to phosphorus atom to halogen atom to fall within the above-mentioned range, it becomes easy to provide a solid electrolyte having a thio-LISICON Region II-type crystal structure and having a higher ionic conductivity.

Although the shape of the amorphous solid electrolyte is not particularly restricted, examples thereof include a granular shape. The average particle diameter ($D_{50}$) of the granular amorphous solid electrolyte is, for example, within a range of 0.01 to 500 $\mu$m, and preferably 0.1 to 200 $\mu$m.

(Crystalline Solid Electrolyte)

The crystalline solid electrolyte obtained by the production method for a solid electrolyte of the present embodiment may be a so-called glass ceramics which is obtained by heating the amorphous solid electrolyte to a crystallization temperature or higher. Examples of a crystal structure thereof include an $Li_3PS_4$ crystal structure, an $Li_4P_2S_6$ crystal structure, an $Li_7PS_6$ crystal structure, an $Li_7P_3S_{11}$ crystal structure, and a crystal structure having peaks at around of $2\theta$ = 20.2° and 23.6° (see, for example, JP 2013-16423 A).

In addition, examples thereof include a crystal structure capable of having a $PS_4^{3-}$ skeleton, such as an $Li_{4-x}Ge_{1-x}P_xS_4$-based thio-LISICON Region II-type crystal structure (see Kanno, et al., Journal of The Electrochemical Society, 148 (7) A742-746 (2001)) and a crystal structure similar to the $Li_{4-x}Ge_{1-x}P_xS_4$-based thio-LISICON Region II-type crystal structure (see Solid State Ionics, 177 (2006), 2721-2725).

Among them, as the crystal structure of the crystalline solid electrolyte obtained by the production method for a solid electrolyte of the present embodiment, a solid electrolyte containing a $PS_4^{3-}$ skeleton is preferred, and a solid electrolyte containing a thio-LISICON Region II-type crystal structure is more preferred from the viewpoint that a higher ionic conductivity is obtained. Here, the "thio-LISICON Region II-type crystal structure" expresses any one of an $Li_{4-x}Ge_{1-x}P_xS_4$-based thio-LISICON Region II-type crystal structure and a crystal structure similar to the $Li_{4-x}Ge_{1-x}P_xS_4$-based thio-LISICON Region II-type crystal structure. In addition, though the crystalline solid electrolyte obtained by the production method for a solid electrolyte of the present embodiment may be one having the above-mentioned thio-LISICON Region II-type crystal structure or may be one having the thio-LISICON Region II-type crystal structure as a main crystal, it is preferably one having the thio-LISICON Region II-type crystal structure as a main crystal. In this specification, the wording "having as a main crystal" means that a proportion of the crystal structure serving as an object in the crystal structure is 80% or more, and it is preferably 90% or more, and more preferably 95% or more. In addition, from the viewpoint of obtaining a higher ionic conductivity, the crystalline solid electrolyte obtained by the production method for a solid electrolyte of the present embodiment is preferably one not containing crystalline $Li_3PS_4$ ($\beta$-$Li_3PS_4$).

In the X-ray diffractometry using a CuK$\alpha$ ray, the $Li_3PS_4$ crystal structure gives diffraction peaks, for example, at around $2\theta$ = 17.5°, 18.3°, 26.1°, 27.3°, and 30.0°; the $Li_4P_2S_6$ crystal structure gives diffraction peaks, for example, at around $2\theta$ = 16.9°, 27.1°, and 32.5°; the $Li_7PS_6$ crystal structure gives diffraction peaks, for example, at around $2\theta$ = 15.3°, 25.2°, 29.6°, and 31.0°; the $Li_7P_3S_{11}$ crystal structure gives diffraction peaks, for example, at around $2\theta$ = 17.8°, 18.5°, 19.7°, 21,8°, 23.7°, 25.9°, 29.6°, and 30.0°; the $Li_{4-x}Ge_{1-x}P_xS_4$-based thio-LISICON Region II-type crystal structure gives diffraction peaks, for example, at around $2\theta$ = 20.1°, 23.9°, and 29.5°; and the crystal structure similar to the $Li_{4-x}Ge_{1-x}P_xS_4$-based thio-LISICON Region II-type crystal structure gives diffraction peaks, for example, at around $2\theta$ = 20.2° and 23.6°. The position of these peaks may vary within a range of $\pm$0.5°.

As mentioned above, in the case where the thio-LISICON Region II-type crystal structure is obtained in the present embodiment, the foregoing crystal structure is preferably one not containing crystalline $Li_3PS_4$ ($\beta$-$Li_3PS_4$). In this case, the solid electrolyte containing the thio-LISICON Region II-type crystal structure preferably does not have a diffraction peak at $2\theta$ = 17.5° and 26.1°.

Although the shape of the crystalline solid electrolyte is not particularly restricted, examples thereof include a granular shape. The average particle diameter

($D_{50}$) of the granular amorphous solid electrolyte is, for example, within a range of 0.01 to 500 μm, and preferably 0.1 to 200 μm.

Next, the Embodiment B is described. This embodiment is concerned with a mode in which in the production method of the present embodiment including mixing a solid electrolyte raw material containing a lithium atom, a sulfur atom, a phosphorus atom, and a halogen atom with a complexing agent, raw materials containing, as the solid electrolyte raw material, a solid electrolyte having an $Li_3PS_4$ structure and a complexing agent, preferably the above-mentioned specific complexing agent are used. In the Embodiment A, the electrolyte precursor is formed while synthesizing the lithium-containing structure, such as $Li_3PS_4$, existent as a main structure in the solid electrolyte obtained by the production method of the present embodiment, through reaction among the raw materials, such as lithium sulfide, and therefore, it may be considered that a constitution ratio of the above-mentioned structure is liable to become small.

Then, in the Embodiment B, a solid electrolyte containing the above-mentioned structure is previously prepared by means of production, and this is used as the raw material. According to this, an electrolyte precursor in which the above-mentioned structure and the raw materials containing lithium, such the lithium halide, are bound (coordinated) with each other via the complexing agent, preferably the above-mentioned specific complexing agent, and the halogen atom is dispersed and fixed is more likely obtained. As a result, a solid electrolyte having a high ionic conductivity, in which the generation of hydrogen sulfide is suppressed, is obtained.

Examples of the raw material containing a lithium atom, a sulfur atom, and a phosphorus atom, which may be used in the Embodiment B, include an amorphous solid electrolyte having an $Li_3PS_4$ structure as a molecular structure (also referred to as "amorphous $Li_3PS_4$") and a crystalline solid electrolyte having that structure (also referred to as "crystalline $Li_3PS_4$"). From the viewpoint of suppressing the generation of hydrogen sulfide, an $Li_4P_2S_7$ structure-free amorphous solid electrolyte or crystalline solid electrolyte is preferred. As such solid electrolytes, ones produced by a conventionally existing production method, such as a mechanical milling method, a slurry method, and a melt quenching method, can be used, and commercially available products can also be used.

In this case, the solid electrolyte containing a lithium atom, a sulfur atom, and a phosphorus atom is preferably an amorphous electrolyte. The dispersibility of the halogen atom in the electrolyte precursor is enhanced, and the halogen atom is easily bound with the lithium atom, the sulfur atom, and the phosphorus atom in the solid electrolyte, and as a result, a solid electrolyte having a higher ionic conductivity can be obtained.

In the embodiment B, the content of the amorphous solid electrolyte having a $Li_3PS_4$ structure is preferably 60 to 100 mol%, more preferably 65 to 90 mol%, and still more preferably 70 to 80 mol% relative to the total of the raw materials.

In the case of using the amorphous solid electrolyte having a $Li_3PS_4$ structure and the halogen simple substance, the content of the halogen simple substance is preferably 1 to 50 mol%, more preferably 2 to 40 mol%, still more preferably 3 to 25 mol%, and yet still more preferably 3 to 15 mol% relative to the amorphous solid electrolyte having a $Li_3PS_4$ structure.

Besides, in the case of using the halogen simple substance and the lithium halide and the case of using the two halogen simple substances, the same as in the Embodiment A is applicable.

In the Embodiment B, in all other cases than the raw materials, for example, the complexing agent, the mixing, the heating, the drying, the amorphous solid electrolyte, and the crystalline solid electrolyte are the same as those described in the Embodiment A.

Next, the Embodiments C and D are described. As shown in the flow chart of Fig. 2, these embodiments are different from the Embodiments A and B, respectively from the viewpoint that a solvent is added to the solid electrolyte raw material and the complexing agent, preferably, the above-mentioned specific complexing agent. The Embodiments C and D are concerned with a heterogeneous method of solid-liquid coexistence, whereas in the Embodiments A and B, the electrolyte precursor that is a solid is formed in the complexing agent that is a liquid. At this time, when the electrolyte precursor is easily soluble in the complexing agent, there is a case where separation of the components is generated. In the Embodiments C and D, by using a solvent in which the electrolyte precursor is insoluble, elution of the components in the electrolyte precursor can be suppressed.

(Solvent)

In these embodiments, it is preferred to add a solvent to the above-mentioned specific complexing agent. In view of the fact that the solid electrolyte raw material and the complexing agent are mixed using the solvent, an effect to be brought by using the complexing agent, namely an effect in which formation of the electrolyte precursor acting with a lithium atom, a sulfur atom, a phosphorus atom, and a halogen atom is promoted, an aggregate via the lithium-containing structure, such as a $PS_4$ structure, or the complexing agent, and an aggregate via the lithium-containing raw material, such as a lithium halide, or the complexing agent are evenly existent, whereby an electrolyte precursor in which a halogen atom is more likely dispersed and fixed is obtained, as a result, an effect for obtaining a high ionic conductivity is easily exhibited.

The production method for a solid electrolyte of the present embodiment is a so-called heterogeneous method, and it is preferred that the electrolyte precursor is not completely dissolved in the complexing agent that is a liquid but deposited. In these embodiments, by adding the solvent, the solubility of the electrolyte precursor can be adjusted. In particular, a halogen atom is liable to be eluted from the electrolyte precursor, and therefore, by adding the solvent, the elution of a halogen atom is suppressed, whereby the desired electrolyte precursor is obtained. As a result, a crystalline solid electrolyte having a high ionic conductivity, in which the generation of hydrogen sulfide is suppressed, can be obtained via the electrolyte precursor in which the components, such as a halogen, are dispersed.

More specifically, as the solvent which is used in the production method for a solid electrolyte of these embodiments, it is possible to broadly adopt a solvent which has hitherto been used in the production of a solid electrolyte. Examples thereof include hydrocarbon solvents, such as an aliphatic hydrocarbon solvent, an alicyclic hydrocarbon solvent, and an aromatic hydrocarbon solvent; and carbon atom-containing solvents, such as an alcohol-based solvent, an ester-based solvent, an aldehyde-based solvent, a ketone-based solvent, an ether-based solvent, and a solvent containing a carbon atom and a hetero atom. The solvent to be used can be appropriately selected from these.

More specifically, examples of the solvent include an aliphatic hydrocarbon solvent, such as hexane, pentane, 2-ethylhexane, heptane, octane, decane, undecane, dodecane, and tridecane; an alicyclic hydrocarbon solvent, such as cyclohexane and methylcyclohexane; an aromatic hydrocarbon solvent, such as benzene, toluene, xylene, mesitylene, ethylbenzene, tert-butylbenzene, trifluoromethylbenzene, nitrobenzene, chlorobenzene, chlorotoluene, and bromobenzene; an alcohol-based solvent, such as ethanol and butanol; an ester-based solvent, such as ethyl acetate and butyl acetate; an aldehyde-based solvent, such as formaldehyde, acetaldehyde, and dimethylformamide; a ketone-based solvent, such as acetone and methyl ethyl ketone; an ether-based solvent, such as diethyl ether, diisopropyl ether, dibutyl ether, tetrahydrofuran, dimethoxyethane, cyclopentylmethyl ether, tert-butylmethyl ether, and anisole; and a solvent containing a carbon atom and a hetero atom, such as acetonitrile, dimethyl sulfoxide, and carbon disulfide.

Of these solvents, an aliphatic hydrocarbon solvent, an alicyclic hydrocarbon solvent, an aromatic hydrocarbon solvent, and an ether-based solvent are preferred; from the viewpoint of obtaining a higher ionic conductivity more stably, heptane, cyclohexane, toluene, ethylbenzene, diethyl ether, diisopropyl ether, dibutyl ether, dimethoxyethane, cyclopentylmethyl ether, tert-butylmethyl ether, and anisole are more preferred; diethyl ether, diisopropyl ether, and dibutyl ether are still more preferred; diisopropyl ether and dibutyl ether are yet still more preferred; and dibutyl ether is especially preferred.

In these embodiments, these solvents may be used alone or in combination of plural kinds thereof.

Using these solvents, the halogen atoms, the halogen atom-containing raw materials such as a lithium halide, and further the halogen atom-containing components constituting the co-crystal to be contained in the electrolyte precursor (for example, an aggregate of a lithium halide and a complexing agent bonding to each other) are made to be hardly soluble, as compared with the above-mentioned complexing agents (i) to (iv), and therefore a halogen atom can be readily fixed in the electrolyte precursor, and, as a result, a halogen atom can exist in a well-dispersed state in the resultant electrolyte precursor and even further in the solid electrolyte, and a solid electrolyte having a high ionic conductivity can be therefore readily obtained. Specifically, the solvent for use in these embodiments preferably has a property not dissolving the electrolyte precursor. The solvent for use in these embodiments is preferably an organic solvent as exemplified hereinabove, and is an organic solvent different from the above-mentioned complexing agent. These solvents may overlap with those exemplified as the other complexing agents than the above-mentioned complexing agents, and such overlapping solvents may belong to any of solvents and complexing agents, but in consideration of easiness in dissolution, they may be handled as solvents.

In the case of using the solvent, the content of the raw materials in the solid electrolyte raw material may be relative to 1 L of the total of the complexing agent and the solvent.

As for drying in these embodiments where a solvent is used, the electrolyte precursor inclusion can be dried at a temperature according to the kind of each of the remaining complexing agent (complexing agent not incorporated into the electrolyte precursor) and the solvent. For example, the drying can be performed at a temperature of a boiling point of the complexing agent or solvent or higher. In addition, the drying can be performed through drying under reduced pressure (vacuum drying) by using a vacuum pump at typically 5 to 100°C, preferably 10 to 85°C, more preferably 15 to 70°C, and still more preferably around room temperature (23°C) (for example, (room temperature) ± about 5°C), to volatilize the complexing agent and the solvent. In addition, in the drying in these embodiments where a solvent is used and where the solvent remains in the electrolyte precursor, the solvent is also removed. However, different from the complexing agent constituting the electrolyte precursor, the solvent hardly constitutes the electrolyte precursor. In consequence, the content of the solvent which may remain in the electrolyte precursor is typically 3% by mass or less, preferably 2% by mass or less, and more preferably 1% by mass or less.

In the Embodiment C, in all other cases than the solvent, for example, the complexing agent, the mixing, the heating, the drying, the amorphous solid electrolyte, and the crystalline solid elements are the same as those described in the Embodiment A. In addition, in the Embodiment D, all other cases than the solvent are the same as those described in the Embodiment B.

The solid electrolyte which is obtained by the

present production method of a solid electrolyte of the present embodiment has a high ionic conductivity and also has an excellent battery performance, and hardly generates hydrogen sulfide, so that it is suitably used for batteries. In the case of adopting a lithium atom as the conduction species, such is especially suitable. The solid electrolyte of the present embodiment may be used for a positive electrode layer, may be used for a negative electrode layer, or may be used for an electrolyte layer. Each of the layers can be produced by a known method.

The battery preferably uses a collector in addition to the positive electrode layer, the electrolyte layer, and the negative electrode layer, and the collector can be any known one. For example, a layer formed by coating Au, Pt, Al, Ti or Cu capable of reacting with the abovementioned solid electrolyte, with Au can be used.

[Electrolyte Precursor]

The electrolyte precursor of the present embodiment is constituted of a lithium atom, a sulfur atom, a phosphorus atom, a halogen atom, an ester group, and a complexing agent having at least one branch.

The electrolyte precursor of the present embodiment is the same as the electrolyte precursor described above in the production method for a solid electrolyte. In addition, the fact that the content of the complexing agent in the electrolyte precursor is preferably 10% by mass or more and 70% by mass or less is also the same as that in the electrolyte precursor described above in the production method for a solid electrolyte.

Examples

Next, the present invention is described specifically with reference to Examples, but it should be construed that the present invention is by no means restricted by these Examples.

(Production Example 1)

In a one-liter impeller-provided reaction tank, 15.3 g of lithium sulfide and 24.7 g of diphosphorus pentasulfide were added in a nitrogen atmosphere. After actuating the impeller, 400 mL of tetrahydrofuran which had been previously cooled to -20°C was introduced into the container. After naturally raising the temperature to room temperature (23°C), agitation was continued for 72 hours, the obtained reaction liquid slurry was charged in a glass filter (pore size: 40 to 100 $\mu$m) to obtain a solid component, and then, the solid component was dried at 90°C, thereby obtaining 38 g of $Li_3PS_4$ (purity: 90% by mass) as a white powder. The obtained powder was subjected to powder X-ray diffractometry (XRD) with an X-ray diffraction (XRD) apparatus (SmartLab apparatus, manufactured Rigaku Corporation). As a result, the foregoing powder expressed a hallow pattern and confirmed to be amorphous $Li_3PS_4$.

(Example 1) (Complexing Agent: N-methylmorpholine, Embodiment A)

Into a stirring bar-equipped Schlenk flask (capacity: 100 mL), 0.60 g (13 mmol) of lithium sulfide ($Li_2S$), 0.97 g (4.4 mmol) of diphosphorus pentasulfide ($P_2S_5$), and 0.58 g (4.4 mmol) of lithium iodide (LiI) were introduced in a nitrogen atmosphere. After the Schlenk flask was cooled in an ice bath and the stirring bar was rotated, 20 mL of N-methylmorpholine as a complexing agent was added. Cooling was stopped, and the reaction temperature was restored to room temperature by spontaneous temperature elevation, and then the stirring was continued for 72 hours. From the resultant electrolyte precursor inclusion, excessive N-methylmorpholine was removed in vacuum (room temperature: 23°C) to give a powdery electrolyte precursor. Next, the electrolyte precursor powder was heated in vacuum at 160°C for 2 hours to give a crystalline solid electrolyte. (The heating temperature for obtaining the crystalline solid electrolyte (160°C in this Example) may be referred to as "crystallization temperature".)

The resultant electrolyte precursor and crystalline solid electrolyte were analyzed in powdery X-ray diffractometry (XRD) using an X-ray diffractometer (XRD) ("D2 Phaser (trade name)" by Bruker Japan K.K.). The X-ray diffraction spectra thereof are shown in Fig. 3 and Fig. 4.

In the X-ray diffraction spectrum of the electrolyte precursor (Fig. 3), a number of peaks differing from the raw materials used and the resultant crystalline solid electrolyte were observed, and these are presumed to be peaks of a complex with the complexing agent. In the X-ray diffraction spectrum of the crystalline solid electrolyte (Fig. 4), crystallization peaks were detected mainly at $2\theta$ = 20.2, 23.6° and 29.3°, and the crystalline solid electrolyte had a thio-LISICON Region II-type crystal structure. The ionic conductivity thereof was measured, and was $1.08 \times 10^{-3}$ (S/cm).

(Example 2) (Complexing Agent: N-methylmorpholine, Embodiment A)

Into a stirring bar-equipped Schlenk flask (capacity: 100 mL), 0.60 g (13 mmol) of lithium sulfide ($Li_2S$), 0.97 g (4.4 mmol) of diphosphorus pentasulfide ($P_2S_5$), 0.19 g (2.2 mmol) of lithium bromide (LiBr) and 0.29 g (2.2 mmol) of lithium iodide (LiI) were introduced in a nitrogen atmosphere. After the Schlenk flask was cooled in an ice bath and the stirring bar was rotated, 20 mL of N-methylmorpholine as a complexing agent was added. Cooling was stopped, and the reaction temperature was restored to room temperature, and then the stirring was continued for 72 hours. From the resultant electrolyte precursor inclusion, excessive complexing agent was evaporated away in vacuum (room temperature: 23°C) to give a powdery electrolyte precursor. Next, the electrolyte precursor powder was heated in vacuum at 180°C for 2 hours

to give a crystalline solid electrolyte. (The heating temperature for obtaining the crystalline solid electrolyte (180°C in this Example) may be referred to as "crystallization temperature".)

The resultant electrolyte precursor and crystalline solid electrolyte were analyzed in powdery X-ray diffractometry (XRD) using an X-ray diffractometer (XRD) ("D2 Phaser (trade name)" by Bruker Japan K.K.). The X-ray diffraction spectra thereof are shown in Fig. 5 and Fig. 6.

In the X-ray diffraction spectrum of the electrolyte precursor (Fig. 5), a number of peaks differing from the raw materials used and the resultant crystalline solid electrolyte were observed, and these are presumed to be peaks of a complex with the complexing agent. In the X-ray diffraction spectrum of the crystalline solid electrolyte (Fig. 6), crystallization peaks were detected mainly at $2\theta$ = 20.3°, 23.6° and 29.3°, and the crystalline solid electrolyte had a thio-LISICON Region II-type crystal structure. The ionic conductivity thereof was measured, and was $1.27 \times 10^{-3}$ (S/cm).

(Example 3) (N,N'-dimethylpiperazine, Embodiment A)

Into a stirring bar-equipped Schlenk flask (capacity: 50 mL), 1.70 g ($Li_3PS_4$: 1.53 g) of the white powder obtained in Production Example 1, 0.19 g of lithium bromide and 0.28 g of lithium iodide were introduced in a nitrogen atmosphere. After the stirring bar was rotated, 24 mL of N,N'-dimethylpiperazine as a complexing agent was added, and stirring was continued for 24 hours. The resultant electrolyte precursor inclusion was dried in vacuum (room temperature: 23°C) to give a powdery electrolyte precursor. Next, the electrolyte precursor powder was heated in vacuum at 140°C for 2 hours to give a crystalline solid electrolyte. (The heating temperature for obtaining the crystalline solid electrolyte (140°C in this Example) may be referred to as "crystallization temperature".)

The resultant electrolyte precursor and crystalline solid electrolyte were analyzed in powdery X-ray diffractometry (XRD) using an X-ray diffractometer (XRD) ("D2 Phaser (trade name)" by Bruker Japan K.K.). The X-ray diffraction spectra thereof are shown in Fig. 7 and Fig. 8.

In the X-ray diffraction spectrum of the electrolyte precursor in Fig. 7, a number of peaks differing from the raw materials used and the resultant crystalline solid electrolyte were observed, and these are presumed to be peaks of a complex with the complexing agent. In the X-ray diffraction spectrum of the crystalline solid electrolyte in Fig. 8, crystallization peaks were detected mainly at $2\theta$ = 20.3°, 23.6° and 29.3°, and the crystalline solid electrolyte had a thio-LISICON Region II-type crystal structure. The ionic conductivity thereof was measured, and was $1.30 \times 10^{-3}$ (S/cm).

(Example 4) (Complexing Agent: N-methylmorpholine , Embodiment C)

Into a stirring bar-equipped Schlenk flask (capacity: 100 mL), 0.60 g (13 mmol) of lithium sulfide ($Li_2S$), 0.97 g (4.4 mmol) of diphosphorus pentasulfide ($P_2S_5$), 0.19 g (2.2 mmol) of lithium bromide (LiBr) and 0.29 g (2.2 mmol) of lithium iodide (LiI) were introduced in a nitrogen atmosphere. After the Schlenk flask was cooled in an ice bath and the stirring bar was rotated, 17.3 mL of tetrahydrofuran as a solvent and 3.4 mL of N-methylmorpholine as a complexing agent were added. Cooling was stopped and the reaction temperature was restored to room temperature, and then stirring was continued for 72 hours. From the resultant electrolyte precursor inclusion, excessive complexing agent was evaporated away in vacuum (room temperature: 23°C) to give a powdery electrolyte precursor. Next, the electrolyte precursor powder was heated in vacuum at 180°C for 2 hours to give a crystalline solid electrolyte. (The heating temperature for obtaining the crystalline solid electrolyte (180°C in this Example) may be referred to as "crystallization temperature".)

The resultant electrolyte precursor and crystalline solid electrolyte were analyzed in powdery X-ray diffractometry (XRD) using an X-ray diffractometer (XRD) ("D2 Phaser (trade name)" by Bruker Japan K.K.). The X-ray diffraction spectra thereof are shown in Fig. 23 and Fig. 24.

In the X-ray diffraction spectrum of the electrolyte precursor (Fig. 23), a number of peaks differing from the raw materials used and the resultant crystalline solid electrolyte were observed, and these are presumed to be peaks of a complex with the complexing agent. In the X-ray diffraction spectrum of the crystalline solid electrolyte (Fig. 24), crystallization peaks were detected mainly at $2\theta$ = 20.3°, 23.6° and 29.3°, and the crystalline solid electrolyte had a thio-LISICON Region II-type crystal structure. The ionic conductivity thereof was measured, and was $1.90 \times 10^{-3}$ (S/cm).

(Reference Example 1) (Complexing Agent: N,N-dimethylaminoacetonitrile, Embodiment A)

Into a stirring bar-equipped Schlenk flask (capacity: 100 mL), 0.60 g (13 mmol) of lithium sulfide ($Li_2S$), 0.97 g (4.4 mmol) of diphosphorus pentasulfide ($P_2S_5$), and 0.58 g (4.4 mmol) of lithium iodide (LiI) were introduced in a nitrogen atmosphere. After the Schlenk flask was cooled in an ice bath and the stirring bar was rotated, 21 mL of N,N-dimethylaminoacetonitrile as a complexing agent was added. Cooling was stopped and the reaction temperature was restored to room temperature, and then stirring was continued for 72 hours. From the resultant electrolyte precursor inclusion, excessive complexing agent was evaporated away in vacuum (room temperature: 23°C) to give a powdery electrolyte precursor. Next, the electrolyte precursor powder was heated in vacuum

at 140°C for 2 hours to give a crystalline solid electrolyte. (The heating temperature for obtaining the crystalline solid electrolyte (140°C in this Example) may be referred to as "crystallization temperature".)

The resultant electrolyte precursor and crystalline solid electrolyte were analyzed in powdery X-ray diffractometry (XRD) using an X-ray diffractometer (XRD) ("D2 Phaser (trade name)" by Bruker Japan K.K.). The X-ray diffraction spectra thereof are shown in Fig. 9 and Fig. 10.

In the X-ray diffraction spectrum of the electrolyte precursor (Fig. 9), a number of peaks differing from the raw materials used and the resultant crystalline solid electrolyte were observed, and these are presumed to be peaks of a complex with the complexing agent. In the X-ray diffraction spectrum of the crystalline solid electrolyte (Fig. 10), crystallization peaks were detected mainly at $2\theta$ = 20.6°, 23.6° and 29.3°, and the crystalline solid electrolyte had a thio-LISICON Region II-type crystal structure. The ionic conductivity thereof was measured, and was $3.19 \times 10^{-4}$ (S/cm).

(Reference Example 2) (Complexing Agent: N,N-dimethylaminoacetonitrile, Embodiment A)

Into a stirring bar-equipped Schlenk flask (capacity: 100 mL), 0.60 g (13 mmol) of lithium sulfide ($Li_2S$), 0.97 g (4.4 mmol) of diphosphorus pentasulfide ($P_2S_5$), and 0.58 g (4.4 mmol) of lithium iodide (LiI) were introduced in a nitrogen atmosphere. After the Schlenk flask was cooled in an ice bath and the stirring bar was rotated, 21 mL of N,N-dimethylaminoacetonitrile as a complexing agent was added. Cooling was stopped and the reaction temperature was restored to room temperature, and then stirring was continued for 72 hours. The resultant electrolyte precursor inclusion was heated in vacuum at 80°C to remove excessive complexing agent through evaporation to give a powdery electrolyte precursor. Next, the electrolyte precursor powder was heated in vacuum at 140°C for 2 hours to give a crystalline solid electrolyte. (The heating temperature for obtaining the crystalline solid electrolyte (140°C in this Example) may be referred to as "crystallization temperature".)

The resultant electrolyte precursor and crystalline solid electrolyte were analyzed in powdery X-ray diffractometry (XRD) using an X-ray diffractometer (XRD) ("D2 Phaser (trade name)" by Bruker Japan K.K.). The X-ray diffraction spectra thereof are shown in Fig. 11 and Fig. 12.

In the X-ray diffraction spectrum of the electrolyte precursor (Fig. 11), a peak that is considered to be a complex with the solvent was not observed, and a halo pattern was observed. The formed N,N-diethylamino structure has a weakened interaction between the complexing agent and the solid electrolyte, and it is presumed that the complex was already decomposed at 80°C. In the X-ray diffraction spectrum of the crystalline solid electrolyte (Fig. 12), crystallization peaks were detected mainly at $2\theta$ = 20.4°, 23.6° and 29.3°, and the crystalline solid electrolyte had a thio-LISICON Region II-type crystal structure. The ionic conductivity thereof was measured, and was $2.59 \times 10^{-4}$ (S/cm).

(Reference Example 3) (Complexing Agent: N,N-dimethylaminopropionitrile, Embodiment A)

Into a stirring bar-equipped Schlenk flask (capacity: 100 mL), 0.60 g (13 mmol) of lithium sulfide ($Li_2S$), 0.97 g (4.4 mmol) of diphosphorus pentasulfide ($P_2S_5$), and 0.58 g (4.4 mmol) of lithium iodide (LiI) were introduced in a nitrogen atmosphere. After the Schlenk flask was cooled in an ice bath and the stirring bar was rotated, 21 mL of N,N-dimethylaminopropionitrile as a complexing agent was added. Cooling was stopped and the reaction temperature was restored to room temperature, and then stirring was continued for 72 hours. The resultant electrolyte precursor inclusion was heated in vacuum at 80°C to remove excessive complexing agent through evaporation to give a powdery electrolyte precursor. Next, the electrolyte precursor powder was heated in vacuum at 140°C for 2 hours to give a crystalline solid electrolyte. (The heating temperature for obtaining the crystalline solid electrolyte (140°C in this Example) may be referred to as "crystallization temperature".)

The resultant electrolyte precursor and crystalline solid electrolyte were analyzed in powdery X-ray diffractometry (XRD) using an X-ray diffractometer (XRD) ("D2 Phaser (trade name)" by Bruker Japan K.K.). The X-ray diffraction spectra thereof are shown in Fig. 13 and Fig. 14.

In the X-ray diffraction spectrum of the electrolyte precursor (Fig. 13), a number of peaks differing from the raw materials used and the resultant crystalline solid electrolyte were observed, and these are presumed to be peaks of a complex with the complexing agent. In the X-ray diffraction spectrum of the crystalline solid electrolyte (Fig. 14), crystallization peaks were detected mainly at $2\theta$ = 20.3°, 23.6° and 29.3°, and the crystalline solid electrolyte had a thio-LISICON Region II-type crystal structure. The ionic conductivity thereof was measured, and was $3.40 \times 10^{-4}$ (S/cm).

(Reference Example 4) (Complexing Agent: diallyl ether, Embodiment A)

Into a stirring bar-equipped Schlenk flask (capacity: 100 mL), 0.60 g (13 mmol) of lithium sulfide ($Li_2S$), 0.97 g (4.4 mmol) of diphosphorus pentasulfide ($P_2S_5$), 0.19 g (2.2 mmol) of lithium bromide (LiBr) and 0.29 g (2.2 mmol) of lithium iodide (LiI) were introduced in a nitrogen atmosphere. After the Schlenk flask was cooled in an ice bath and the stirring bar was rotated, 23 mL of diallyl ether as a complexing agent was added. Cooling was stopped and the reaction temperature was restored to room temperature, and then stirring was continued for 72 hours. From the resultant electrolyte precursor inclusion, excessive complexing agent was removed through evaporation in vacuum (room temperature: 23°C) to give a powdery electrolyte precursor. Next, the electrolyte precursor powder was heated in vacuum at 200°C for 2 hours to give a crystalline solid electrolyte. (The heating temperature for obtaining the crystalline solid electrolyte (200°C in this Example) may be referred to as "crystallization temperature".)

The resultant electrolyte precursor and crystalline solid electrolyte were analyzed in powdery X-ray diffractometry (XRD) using an X-ray diffractometer (XRD) ("D2 Phaser (trade name)" by Bruker Japan K.K.). The X-ray diffraction spectra thereof are shown in Fig. 15 and Fig. 16.

In the X-ray diffraction spectrum of the electrolyte precursor (Fig. 15), a peak that is considered to be a complex with the solvent was not observed, and a halo pattern was observed. In the case where diallyl ether is used as a complexing agent, the interaction between the complexing agent and the solid electrolyte is not so strong, and it is presumed that the complex would be decomposed under reduced pressure as room temperature. In the X-ray diffraction spectrum of the crystalline solid electrolyte (Fig. 16), crystallization peaks were detected mainly at 2θ = 20.6°, 23.6° and 29.8°, and the crystalline solid electrolyte had a thio-LISICON Region II-type crystal structure. The ionic conductivity thereof was measured, and was $5.35 \times 10^{-4}$ (S/cm).

(Reference Example 5) (Complexing Agent: diisopropylamine, Embodiment B)

Into a stirring bar-equipped Schlenk flask (capacity: 50 mL), 1.70 g ($Li_3PS_4$: 1.53 g, 8.5 mmol) of the white powder obtained in Production Example 1, 0.19 g (2.2 mmol) of lithium bromide (LiBr) and 0.28 g (2.1 mmol) of lithium iodide (LiI) were introduced in a nitrogen atmosphere. After the Schlenk flask was cooled in an ice bath and the stirring bar was rotated, 20 mL of diisopropylamine as a complexing agent was added. Cooling was stopped and the reaction temperature was restored to room temperature, and then stirring was continued for 72 hours. The resultant electrolyte precursor inclusion was heated at 80°C in vacuum to remove excessive complexing agent through evaporation to give a powdery electrolyte precursor. Next, the electrolyte precursor powder was heated in vacuum at 150°C for 2 hours to give a crystalline solid electrolyte. (The heating temperature for obtaining the crystalline solid electrolyte (150°C in this Example) may be referred to as "crystallization temperature".)

The resultant electrolyte precursor and crystalline solid electrolyte were analyzed in powdery X-ray diffractometry (XRD) using an X-ray diffractometer (XRD) ("D2 Phaser (trade name)" by Bruker Japan K.K.). The X-ray diffraction spectra thereof are shown in Fig. 17 and Fig. 18.

In the X-ray diffraction spectrum of the electrolyte precursor (Fig. 17), a peak that is considered to be a complex with the solvent was not observed, and a halo pattern was observed. It is considered that, by adding a branched structure to the solvent, the interaction between the solvent and the electrolyte would be weakened and the complex would be already decomposed at 80°C. In the X-ray diffraction spectrum of the crystalline solid electrolyte (Fig. 18), crystallization peaks were detected mainly at 2θ = 20.3°, 23.8° and 29.6°, and the crystalline solid electrolyte had a thio-LISICON Region II-type crystal structure. The ionic conductivity thereof was measured, and was $1.03 \times 10^{-3}$ (S/cm).

(Reference Example 6) (Complexing Agent: diisobutylamine, Embodiment B)

Into a stirring bar-equipped Schlenk flask (capacity: 50 mL), 1.70 g ($Li_3PS_4$: 1.53 g, 8.5 mmol) of the white powder obtained in Production Example 1, 0.19 g (2.2 mmol) of lithium bromide (LiBr) and 0.28 g (2.1 mmol) of lithium iodide (LiI) were introduced in a nitrogen atmosphere. After the Schlenk flask was cooled in an ice bath and the stirring bar was rotated, 20 mL of diisopropylamine as a complexing agent was added. Cooling was stopped and the reaction temperature was restored to room temperature, and then stirring was continued for 72 hours. The resultant electrolyte precursor inclusion was heated at 80°C in vacuum to remove excessive complexing agent through evaporation to give a powdery electrolyte precursor. Next, the electrolyte precursor powder was heated in vacuum at 150°C for 2 hours to give a crystalline solid electrolyte. (The heating temperature for obtaining the crystalline solid electrolyte (150°C in this Example) may be referred to as "crystallization temperature".)

The resultant electrolyte precursor and crystalline solid electrolyte were analyzed in powdery X-ray diffractometry (XRD) using an X-ray diffractometer (XRD) ("D2 Phaser (trade name)" by Bruker Japan K.K.). The X-ray diffraction spectra thereof are shown in Fig. 19 and Fig. 20.

In the X-ray diffraction spectrum of the electrolyte precursor (Fig. 19), a peak that is considered to be a complex with the solvent was not observed, and a halo pattern was observed. It is considered that, by adding a branched structure to the solvent, the interaction between the solvent and the electrolyte would be weakened and the complex would be already decomposed at 80°C. In the X-ray diffraction spectrum of the crystalline solid electrolyte (Fig. 20), crystallization peaks were detected mainly at 2θ = 20.3°, 23.8° and 29.6°, and the crystalline solid electrolyte was known to have a thio-LISICON Region II-type crystal structure.

(Comparative Example 1) (Complexing Agent: ethylene glycol monomethyl ether acetate, Embodiment B)

An electrolyte precursor was produced in the

same manner as in Example 1, except that in Example 1, the complexing agent was changed to ethylene glycol monomethyl ether acetate, and the electrolyte precursor was tried to be dried in vacuum at 80°C for 2 hours, but this became like starch syrup and the solvent could not be removed from it. This was further heated up to 150°C, but this still became starch syrup having a high viscosity. Accordingly, when this was restored to room temperature, this stuck to the flask like caramel. The caramel-like solid deposit was scraped off and pulverized, and analyzed through powdery X-ray diffractometry (XRD) (Fig. 21). As a result of thermogravimetric measurement thereof, a weight loss of about 30% by mass was confirmed. It is considered that a large amount of the solvent remained, and that, since a compound alone not having a specific structure like the complexing agents (i) to (iv) was used, the interaction between the complexing agent and the electrolyte precursor was strong and therefore the complexing agent used could not be removed.

(Comparative Example 2)

An electrolyte precursor was produced in the same manner as in Example 1 except that in Example 1 the complexing agent was changed to dimethoxyethane, and the electrolyte precursor was heat-treated at 120°C in vacuum to give a powder. In the X-ray diffraction spectrum (Fig. 22) of the powder, peaks derived from the raw material LiBr appeared strongly.

Industrial Applicability

According to the production method for a solid electrolyte of the present embodiment, a solid electrolyte having a high ionic conductivity can be produced using a liquid-phase method. The solid electrolyte obtained according to the production method of the present embodiment is favorably used for batteries, especially for batteries for use in information-related instruments and communication instruments such as personal computers, video cameras and mobile telephones.

## Claims

1. A method for producing a solid electrolyte that contains a lithium atom, a sulfur atom, a phosphorus atom and a halogen atom, comprising mixing a complexing agent and a solid electrolyte raw material, wherein the complexing agent is a heterocyclic compound having a hetero ring containing 2 or more hetero atoms.

2. The method for producing a solid electrolyte according to claim 1, wherein the hetero ring is a 3-membered or more and 12-membered or less monocyclic hetero ring.

3. The method for producing a solid electrolyte according to claim 1 or 2, wherein the hetero ring has hetero atoms not neighboring to each other.

4. The method for producing a solid electrolyte according to any one of claims 1 to 3, wherein the hetero ring is a 6-membered monocyclic hetero ring.

5. The method for producing a solid electrolyte according to any one of claims 1 to 4, wherein the hetero ring has hetero atoms connected by 2 or 3 carbon atoms.

6. The method for producing a solid electrolyte according to any one of claims 1 to 4, wherein the hetero atom is at least one atom selected from a nitrogen atom, an oxygen atom a sulfur atom and a phosphorus atom.

7. The method for producing a solid electrolyte according to any one of claims 1 to 6, wherein the hetero ring is a morpholine ring.

8. The method for producing a solid electrolyte according to any one of claims 1 to 7, wherein the complexing agent is N-methylmorpholine.

9. The method for producing a solid electrolyte according to any one of claims 1 to 6, wherein the hetero ring is a piperazine ring.

10. The method for producing a solid electrolyte according to any one of claims 1 to 6 and 9, wherein the complexing agent is N,N'-dimethylpiperazine.

11. The method for producing a solid electrolyte according to any one of claims 1 to 10, wherein the solid electrolyte contains a $PS_4^{3-}$ skeleton.

12. The method for producing a solid electrolyte according to any one of claims 1 to 11, wherein the solid electrolyte contains a thio-LISICON Region II-type crystal structure.

13. The method for producing a solid electrolyte according to any one of claims 1 to 12, wherein the solid electrolyte does not have a diffraction peak at $2\theta$ = 17.5° and 26.1° in X-ray diffractometry using a CuK$\alpha$ ray.

14. The method for producing a solid electrolyte according to any one of claims 1 to 13, wherein the solid electrolyte raw material contains lithium sulfide and diphosphorus pentasulfide.

15. The method for producing a solid electrolyte according to any one of claims 1 to 14, wherein the solid electrolyte raw material contains amorphous $Li_3PS_4$

or crystalline $Li_3PS_4$.

**16.** The method for producing a solid electrolyte according to any one of claims 1 to 15, including producing an electrolyte precursor constituted of the complexing agent, and a lithium atom, a sulfur atom, a phosphorus atom and a halogen atom.

**17.** The method for producing a solid electrolyte according to claim 16, including mixing the solid electrolyte raw material, the complexing agent, and a solvent not dissolving the electrolyte precursor.

**18.** The method for producing a solid electrolyte according to claim 17, wherein the solvent is at least one solvent selected from an aliphatic hydrocarbon solvent, an alicyclic hydrocarbon solvent, an aromatic hydrocarbon solvent, an ester-based solvent, a nitrile-based solvent and an ether-based solvent.

**19.** The method for producing a solid electrolyte according to any one of claims 16 to 18, including heating the electrolyte precursor.

[Fig. 1]

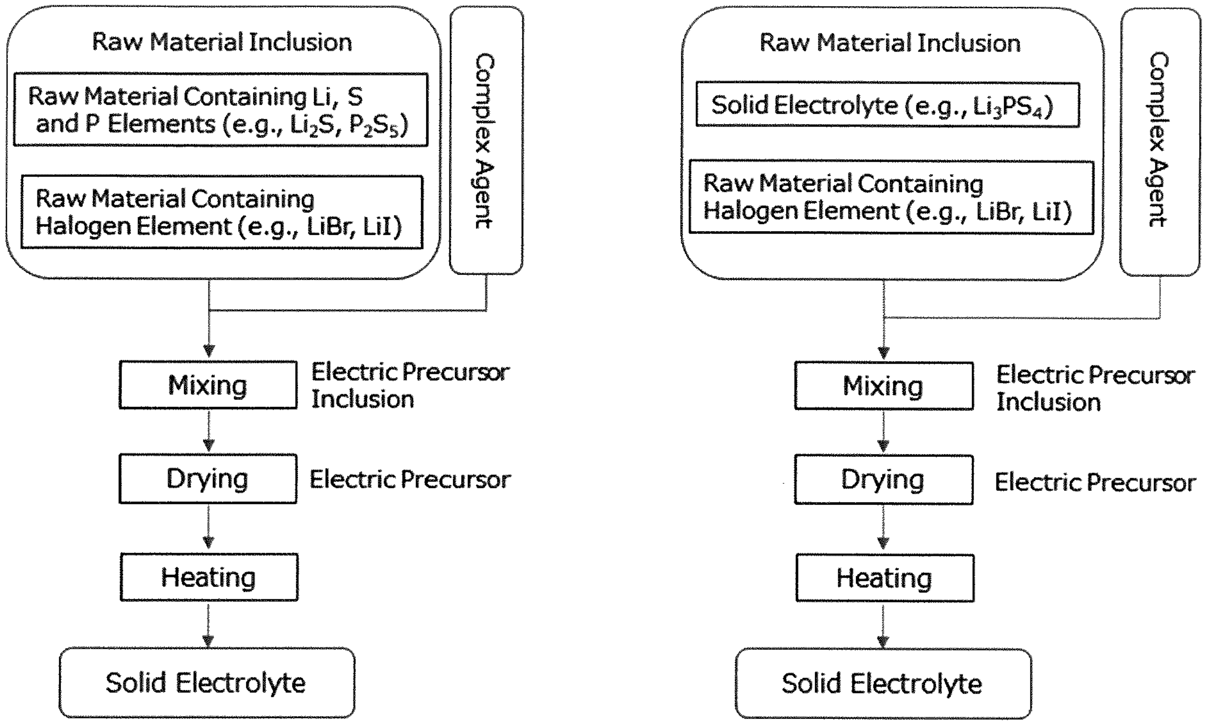


(Embodiment A) ( Embodiment B)

[Fig. 2]

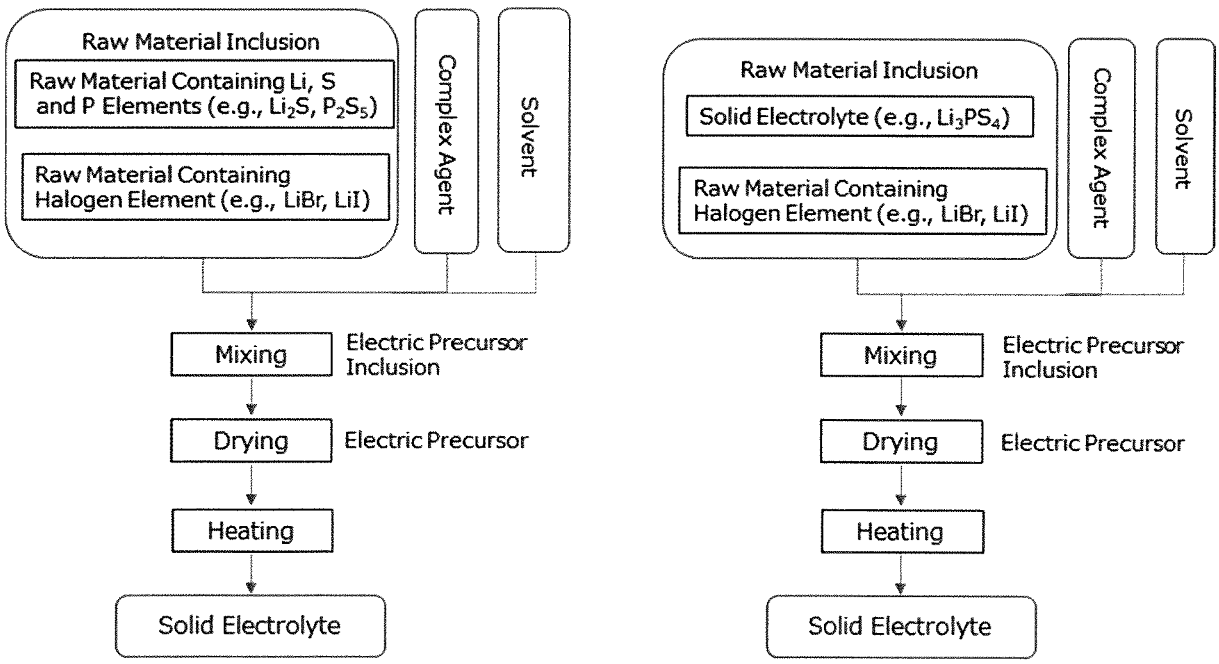


( Embodiment C) ( Embodiment D)

[Fig. 3]

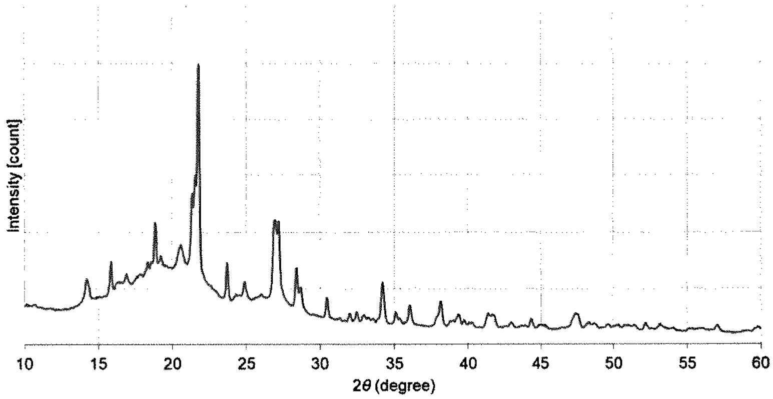


[Fig. 4]

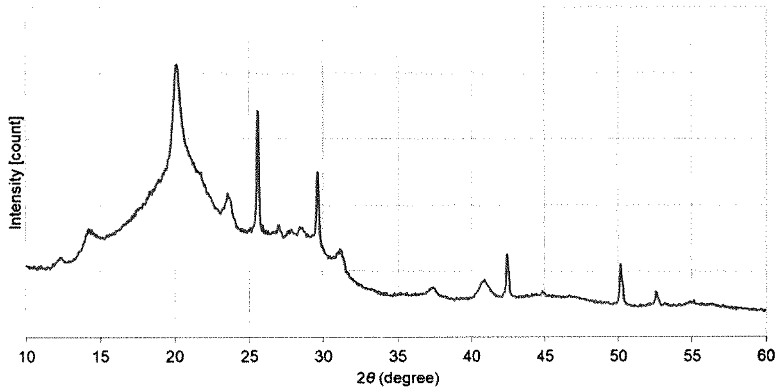


[Fig. 5]

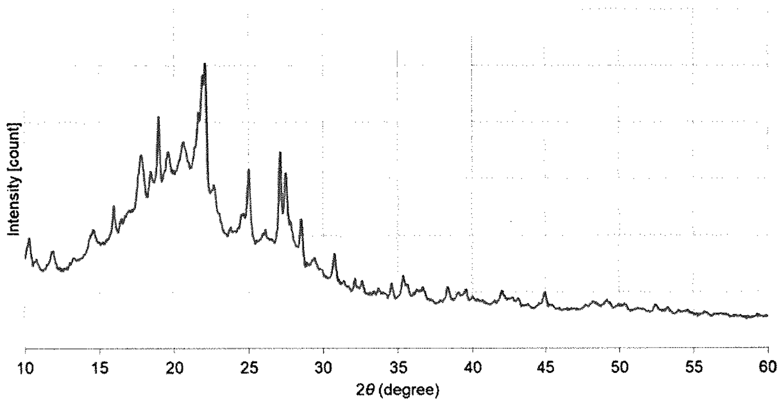

[Fig. 6]

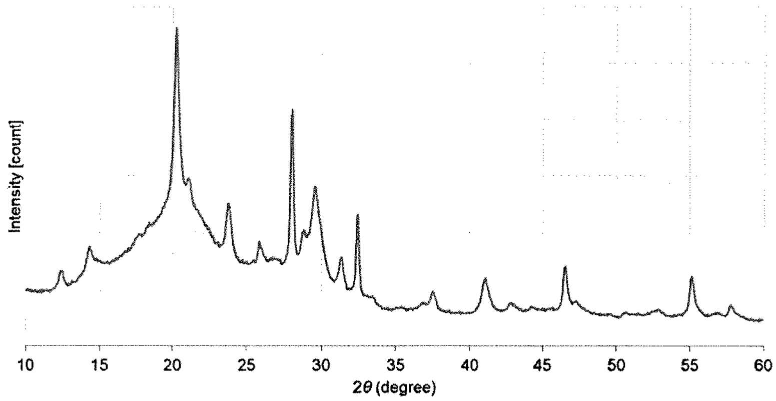


[Fig. 7]

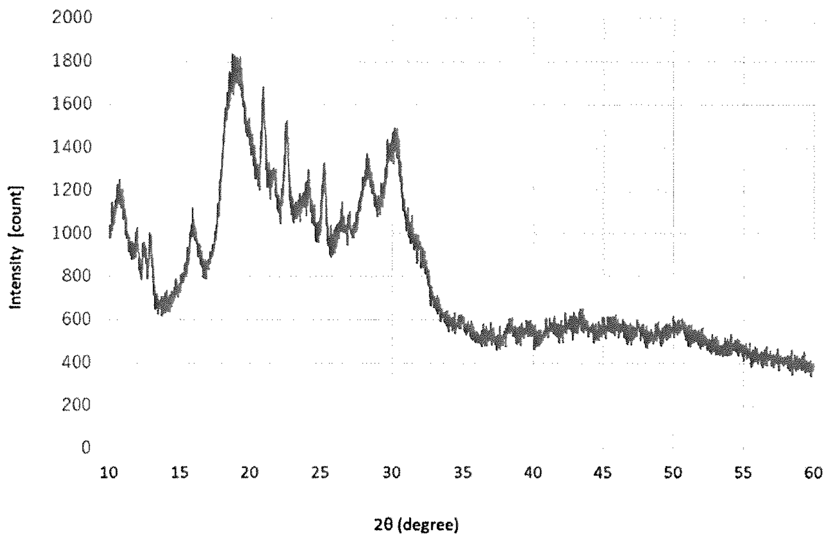


[Fig. 8]

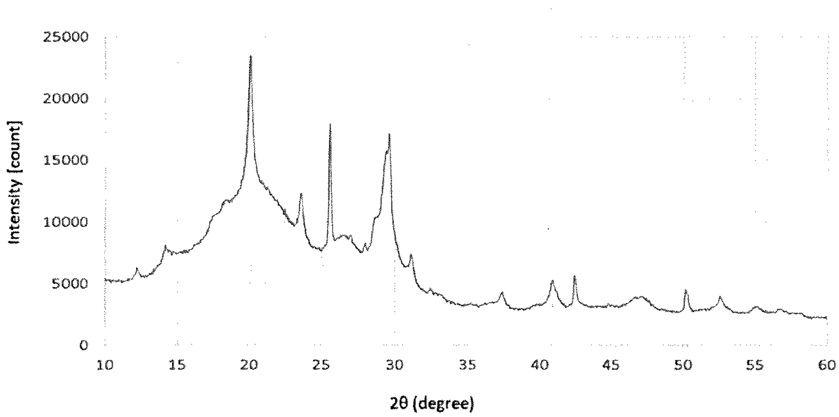

[Fig. 9]

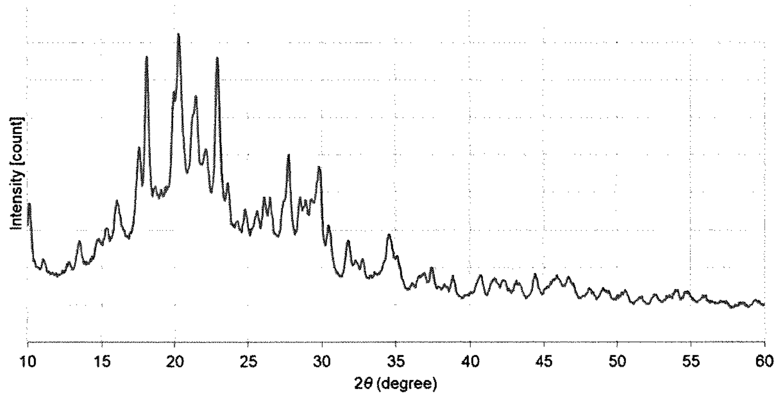


[Fig. 10]

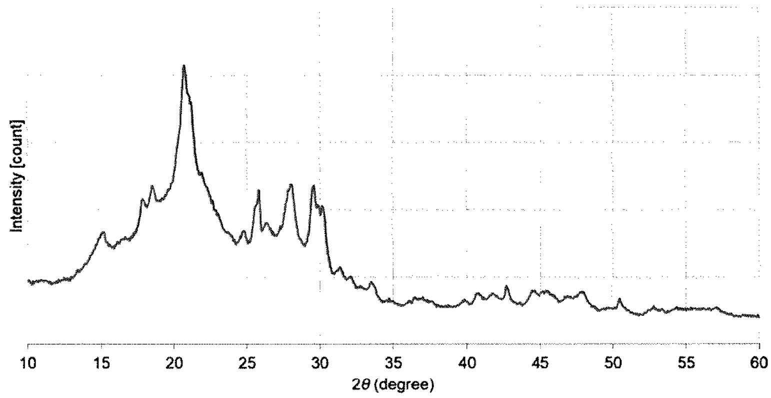


[Fig. 11]

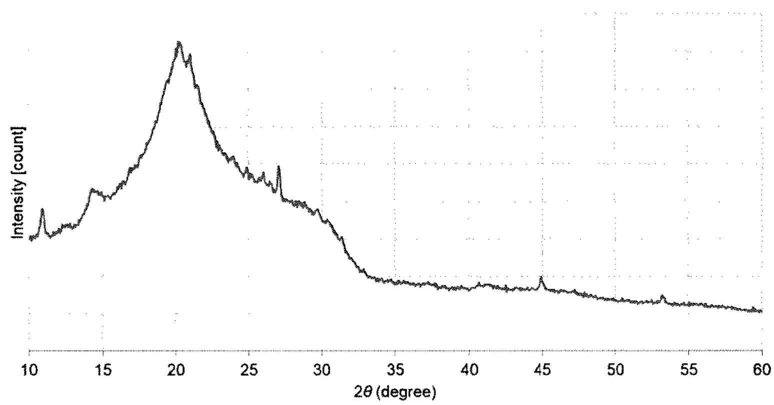

[Fig. 12]

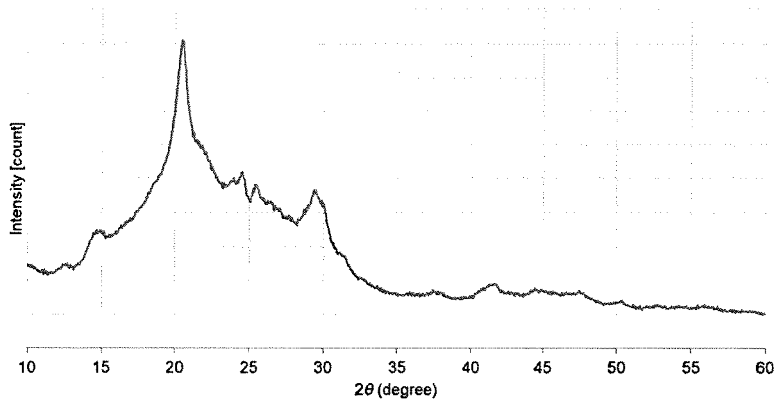


[Fig. 13]

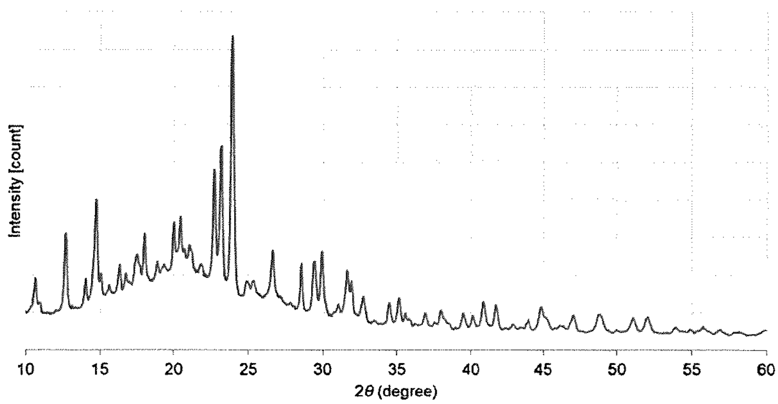


[Fig. 14]

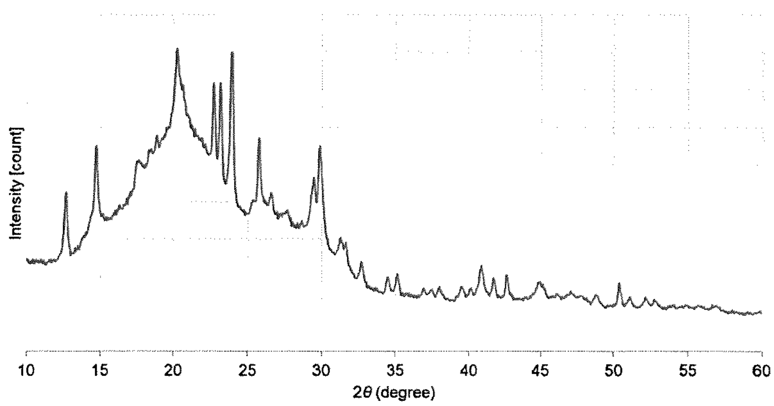

[Fig. 15]

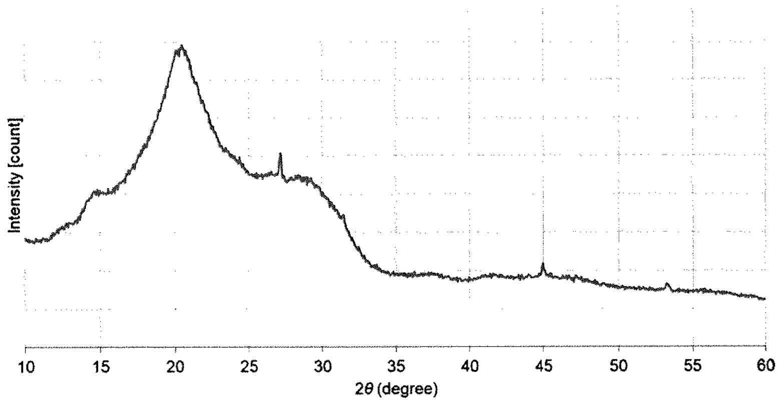


[Fig. 16]

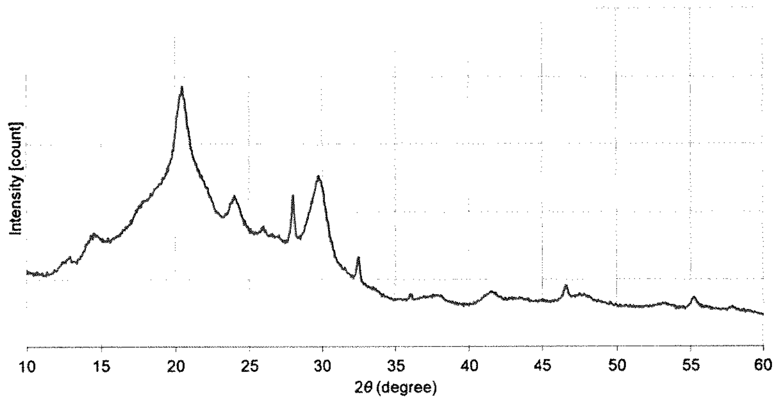


[Fig. 17]

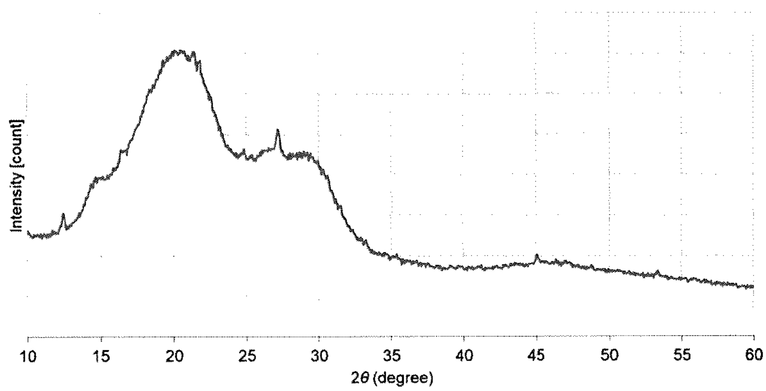

[Fig. 18]

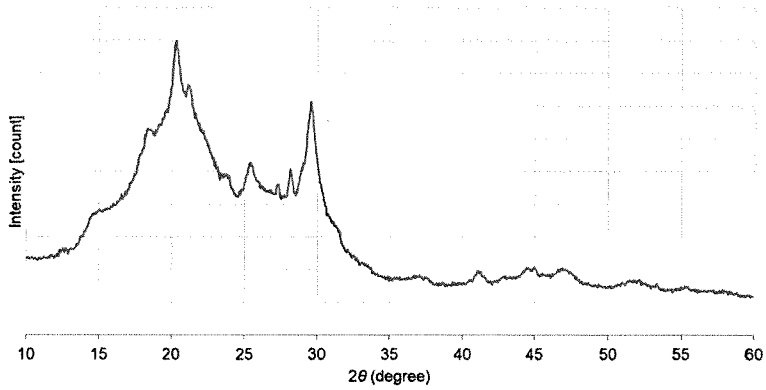


[Fig. 19]

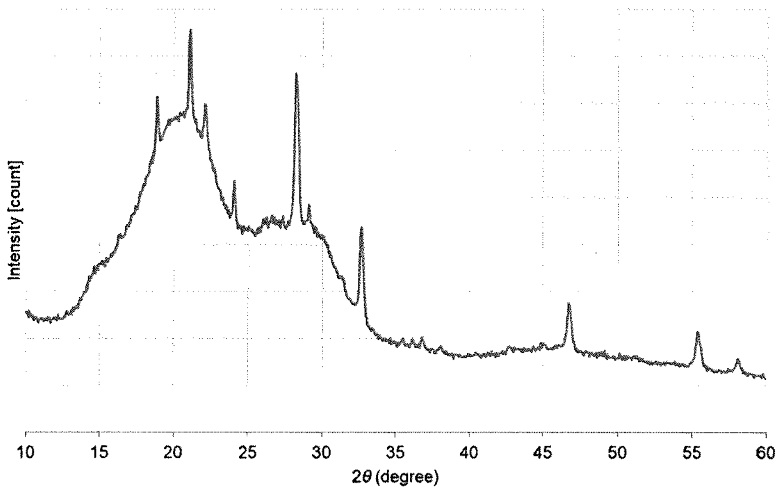


[Fig. 20]

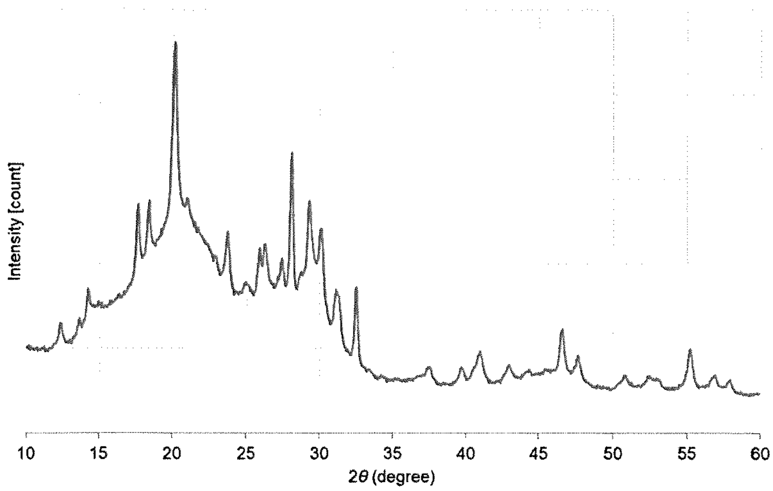

[Fig. 21]

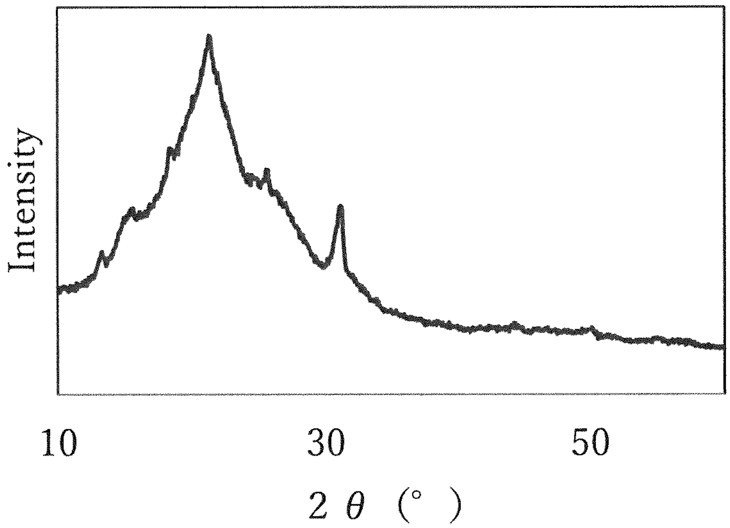


[Fig. 22]

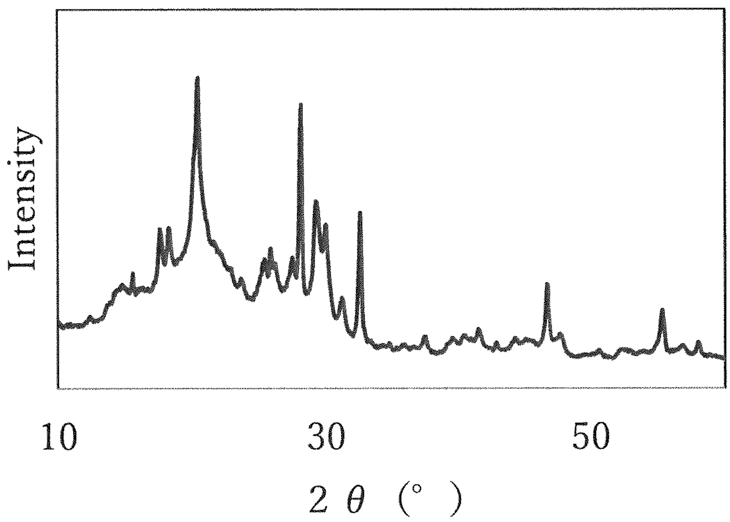

[Fig. 23]

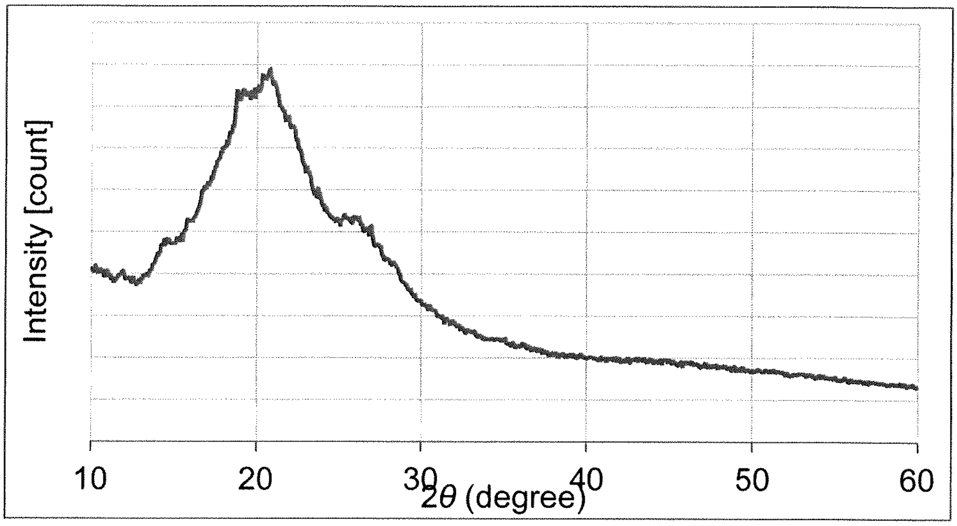
Intensity [count]
10
20
30
40
50
60
2θ (degree)

[Fig. 24]

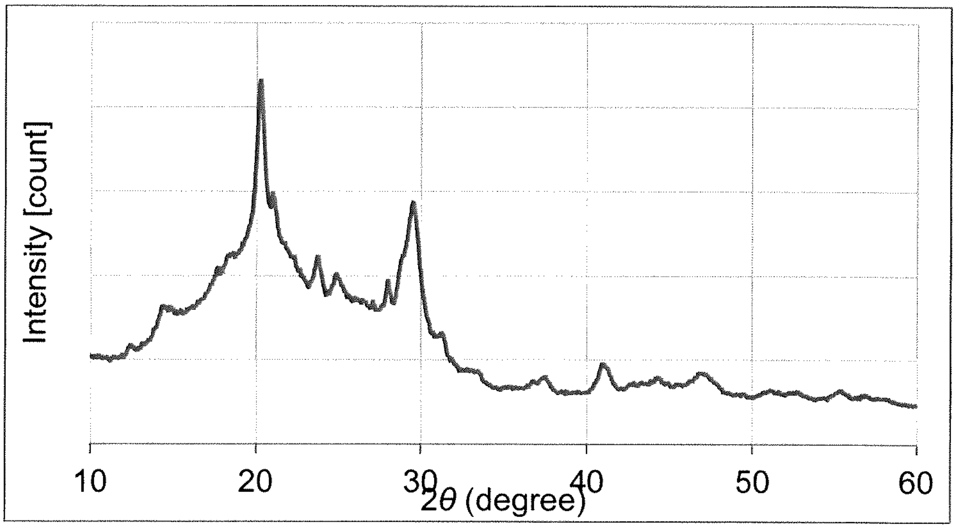
Intensity [count]
10
20
30
40
50
60
2θ (degree)

**INTERNATIONAL SEARCH REPORT**

International application No. PCT/JP2020/047717

A. CLASSIFICATION OF SUBJECT MATTER

H01B 13/00(2006.01)i; C01B 25/14(2006.01)i; H01B 1/06(2006.01)i; H01B 1/10(2006.01)i; H01M 6/18(2006.01)i; H01M 10/0562(2010.01)i
FI: H01B13/00 Z; C01B25/14; H01B1/06 A; H01B1/10; H01M6/18 A; H01M10/0562

According to International Patent Classification (IPC) or to both national classification and IPC

B. FIELDS SEARCHED

Minimum documentation searched (classification system followed by classification symbols)
H01B13/00; C01B25/14; H01B1/06; H01B1/10; H01M6/18; H01M10/0562

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2016-134316 A (IDEMITSU KOSAN CO., LTD.) 25 July 2016 (2016-07-25) | 1-19 |
| A | JP 2019-57400 A (IDEMITSU KOSAN CO., LTD.) 11 April 2019 (2019-04-11) | 1-19 |
| A | WO 2018/193994 A1 (TOYOTA MOTOR CORP.) 25 October 2018 (2018-10-25) | 1-19 |
| A | JP 2005-100966 A (NIPPON SODA CO., LTD.) 14 April 2005 (2005-04-14) | 1-19 |
| A | JP 2009-143975 A (NIPPON SHOKUBAI CO., LTD.) 02 July 2009 (2009-07-02) | 1-19 |

☐ Further documents are listed in the continuation of Box C.

☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>19 January 2021 (19.01.2021) | Date of mailing of the international search report<br>26 January 2021 (26.01.2021) |
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**
Information on patent family members

International application No.
PCT/JP2020/047717

| Patent Documents referred in the Report | Publication Date | Patent Family | Publication Date |
|---|---|---|---|
| JP 2016-134316 A | 25 Jul. 2016 | (Family: none) | |
| JP 2019-57400 A | 11 Apr. 2019 | (Family: none) | |
| WO 2018/193994 A1 | 25 Oct. 2018 | CN 110537270 A | |
| JP 2005-100966 A | 14 Apr. 2005 | (Family: none) | |
| JP 2009-143975 A | 02 Jul. 2009 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2017159667 A
- JP 2014191899 A
- WO 2014192309 A
- WO 2018054709 A
- JP 2013016423 A


### Non-patent literature cited in the description


- *CHEMISTRY OF MATERIALS,* 2017, (29), 1830-1835
- *Solid State Ionics,* 2006, vol. 177, 2721-2725